# EUROPÄISCHE PATENTSCHRIFT

(11) **EP 0 742 808 B1**
(45) Veröffentlichungstag und Bekanntmachung des Hinweises auf die Patenterteilung: **22.04.1998**
(21) Anmeldenummer: 95906981.6
(22) Anmeldetag: 20.01.1995
(51) Int. Cl.: C08G 85/00, C08G 63/685, C08G 64/02, C08G 18/38, C08G 65/34, C08G 71/04

(54) **KONDENSATIONS- UND ADDITIONSPOLYMERE MIT N,N'-VERBRÜCKTEN BIS-TETRAMETHYLPIPERIDINYLOXY-GRUPPIERUNGEN**
CONDENSATION AND ADDITION POLYMERS WITH N,N'-BRIDGED BIS-TETRAMETHYLPIPERIDINYLOXY GROUPS
POLYMERES DE CONDENSATION ET D'ADDITION COMPORTANT DES GROUPEMENTS BIS-TETRAMETHYLPIPERIDINYLOXY A PONTS N, N'

(30) Priorität: 02.02.1994 DE 4403084
(43) Veröffentlichungstag der Anmeldung: 20.11.1996
(73) Patentinhaber: BASF AKTIENGESELLSCHAFT, 67056 Ludwigshafen (DE)
(72) Erfinder: AUMÜLLER, Alexander, D-67435 Neustadt (DE); TRAUTH, Hubert, D-67373 Dudenhofen (DE)
(86) Internationale Anmeldenummer: EP9500204
(87) Internationale Veröffentlichungsnummer: WO9521211

(56) Entgegenhaltungen:
- FR-A- 2 351 144
- US-A- 3 974 127

## Beschreibung

Die vorliegende Erfindung betrifft neue Kondensations- und Additionspolymere mit N,N'-verbrückten Bis-tetramethylpiperidinyloxy-Gruppierung, Verfahren zu deren Herstellung sowie deren Verwendung als Lichtschutzmittel und Stabilisatoren für organisches Material.

In der DE-A 27 19 131 werden Polyester aus 1-(2-Hydroxyethyl)-2,2,6,6-tetramethyl-4-hydroxypiperidin und Dicarbonsäureestern, z.B. Bernsteinsäuredimethylester, als Lichtschutzmittel für Kunststoffe und Lacke beschrieben. Derartige oligomere Polyester haben sich als übliche Lichtschutzmittel auf dem Markt etabliert.

Weiterhin werden in der DE-A 27 19 131 Polyester aus Diolen der allgemeinen Formel 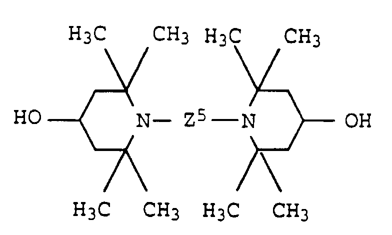 in der Z⁵ für C₄- bis C₈-Alkylenbrücken steht, und Dicarbonsäureestern als Lichtschutzmittel beschrieben.

Unbefriedigend ist bei den genannten Mitteln des Standes der Technik häufig noch die zu geringe Verträglichkeit mit Kunststoffen, die zu geringe Dauer der Schutzwirkung, die Eigenfarbe der Substanzen, die Neigung zur Flüchtigkeit und die thermische Zersetzung der Stabilisatoren beim Einarbeiten bei erhöhter Temperatur.

Aufgabe der vorliegenden Erfindung war es daher, Lichtschutzmittel bzw. Stabilisatoren bereitzustellen, die einen wirkungsvolleren Schutz für organisches Material mit sich bringen. Insbesondere sollte die Dauer der Schutzwirkung verlängert werden, da diese bei den Polyestern der DE-A 27 19 131 in aller Regel zu Kurz ist.

Demgemäß wurden Kondensations- und Additionspolymere gefunden, welche als wiederkehrende Struktureinheit N,N'-verbrückte Bis-tetramethylpiperidinyloxy-Gruppierungen der Formel I 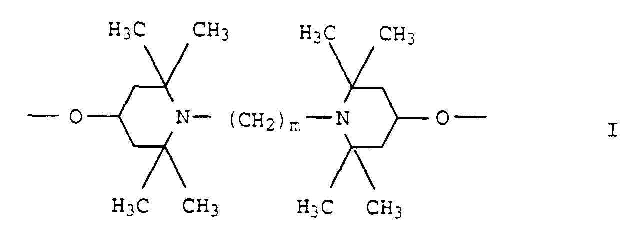 in der die Variable m für die Zahl 2 oder 3 steht, enthalten. Insbesondere eignen sich Polyester der allgemeinen Formel II 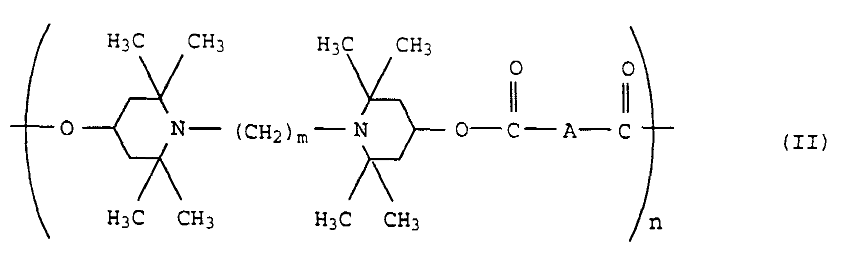 in der
- A: eine direkte Bindung, C₁- bis C₁₈-Alkylen, das durch bis zu 8 nicht benachbarte Sauerstoffatome oder Brückenglieder der Formel -NR¹- unterbrochen sein kann, C₂- bis C₁₈-Alkenylen, C₃- bis C₁₂-cycloalkylen, das durch bis zu 3 C₁- bis C₄-Alkylgruppen substituiert sein kann, C₆- bis C₁₈-cycloalkyl-alkylen, das durch bis zu 3 C₁- bis C₄-Alkylgruppen substituiert sein kann, Phenylen, Biphenylen oder Naphthylen, welches durch bis zu 3 C₁- bis C₈-Alkylgruppen oder Hydroxylgruppen substituiert sein kann, C₇- bis C₂₂-Phenylalkylen oder -Diphenylalkylen, das durch bis zu 3 C₁- bis C₈-Alkylgruppen oder Hydroxylgruppen substituiert sein kann, oder einen zweibindigen fünf- oder sechsgliedrigen ungesättigten oder gesättigten heterocyclischen Rest mit bis zu 3 Heteroatomen aus der Gruppe Stickstoff, Sauerstoff und Schwefel, welcher zusätzlich benzanelliert und durch bis zu 3 C₁- bis C₈-Alkylgruppen oder Hydroxylgruppen substituiert sein kann, bezeichnet, wobei zwischen dem Bruckenglied A und einer oder beiden flankierenden Carbonylgruppen noch jeweils ein Sauerstoffatom eingeschoben sein kann und wobei
- R¹: C₁- bis C₄-Alkyl bedeutet,
- m: die oben genannte Bedeutung und
- n: einen Wert von 2 bis 50 hat.

Weiterhin erzielt man auch hervorragende Ergebnisse mit Polyurethanen der allgemeinen Formel III 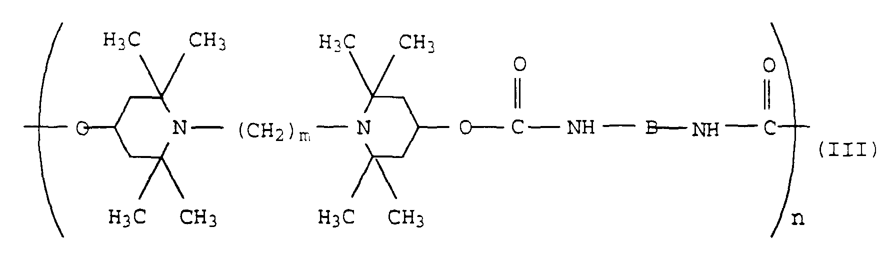 in der
- B: C₂- bis C₁₈-Alkylen, das durch bis zu 8 nicht benachbarte Sauerstoffatome unterbrochen sein kann, C₄- bis C₁₈-Alkenylen, C₅- bis C₁₂-Cycloalkylen, das durch bis zu 3 C₁- bis C₄-Alkylgruppen substituiert sein kann, C₆- bis C₁₈-cycloalkyl-alkylen, das durch bis zu 3 C₁- bis C₄-Alkylgruppen substituiert sein kann, oder C₇- bis C₂₂-Phenylalkylen oder -Diphenylalkylen, das durch bis zu 3 C₁- bis C₈-Alkylgruppen substituiert sein kann, bezeichnet,
- m: die oben genannte Bedeutung und
- n: einen Wert von 2 bis 50 hat.

Weiterhin erzielt man auch hervorragende Ergebnisse mit Polyethern der allgemeinen Formel IV 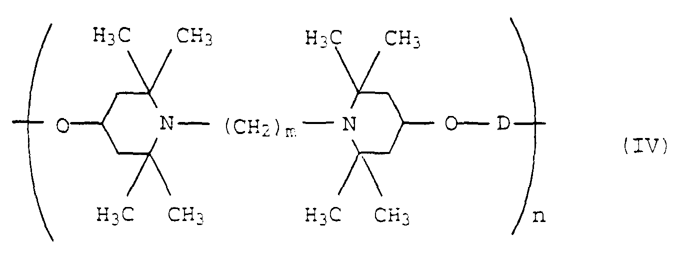 in der
- D: C₂- bis C₁₈-Alkylen, das durch bis zu 8 nicht benachbarte Sauerstoffatome unterbrochen sein kann, C₄- bis C₁₈-Alkenylen, C₅- bis C₁₂-Cycloalkylen, das durch bis zu 3 C₁- bis C₄-Alkylgruppen substituiert sein kann, C₆- bis C₁₈-cycloalkyl-alkylen, das durch bis zu 3 C₁- bis C₄-Alkylgruppen substituiert sein kann, oder C₈- bis C₂₂-Phenylalkylen, das durch bis zu 3 C₁- bis C₈-Alkylgruppen substituiert sein kann, bezeichnet,
- m: die oben genannte Bedeutung und
- n: einen Wert von 2 bis 50 hat.

Weiterhin erzielt man auch hervorragende Ergebnisse mit Polycarbonaten der allgemeinen Formel V 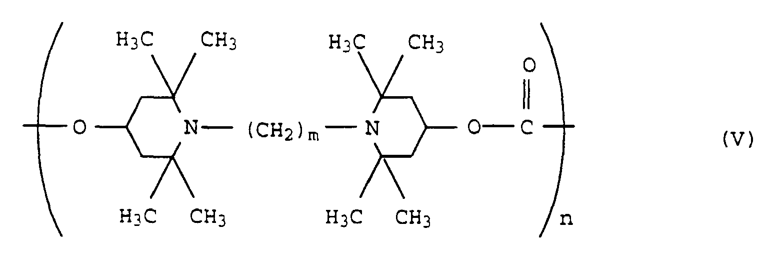 in der
- m: die oben genannte Bedeutung und
- n: einen Wert von 2 bis 50 hat.

In den erfindungsgemäßen Kondensations- und Additionspolymeren können bis zu 90 mol-%, vorzugsweise 1 bis 75 mol-%, insbesondere 5 bis 50 mol-% der Gruppierung I durch Struktureinheiten der allgemeinen Formel VI

-G-E-G- (VI)

in der
- E: C₂- bis C₃₀-Alkylen, das durch bis zu 14 nicht benachbarte Sauerstoffatome oder Brückenglieder der Formel -NR²- unterbrochen sein kann, C₄- bis C₁₈-Alkenylen, C₃- bis C₁₂-cycloalkylen, das durch bis zu 3 C₁- bis C₄-Alkylgruppen substituiert sein kann, C₆- bis C₁₈-cycloalkyl-alkylen, das durch bis zu 3 C₁- bis C₄-Alkylgruppen substituiert sein kann, Phenylen, Biphenylen oder Naphthylen, welches durch bis zu 3 C₁- bis C₈-Alkylgruppen oder Hydroxylgruppen substituiert sein kann, oder C₇- bis C₂₂-Phenylalkylen oder -Diphenylalkylen, das durch bis zu 3 C₁- bis C₈-Alkylgruppen oder Hydroxylgruppen substituiert sein kann, bezeichnet, wobei
- R²: Wasserstoff oder C₁- bis C₄-Alkyl bedeutet, und
- G: für ein Sauerstoffatom oder die Gruppierung -NR²- steht,
ersetzt sein.

Alkylengruppen und Alkenylengruppen für A, B, D oder E können dabei sowohl verzweigt als auch unverzweigt sein.

Ist zwischen dem Brückenglied A und einer oder beiden flankierenden Carbonylgruppen noch jeweils ein Sauerstoffatom eingeschoben, liegen Polycarbonatester bzw. Polybiscarbonate vor, welche wegen der Systematik der Variablendefinitionen hier zu den Polyestern gerechnet werden.

A kann beispielsweise die direkte Bindung sein. Unverzweigte C₁- bis C₁₈-Alkylengruppen für A sind beispielsweise -(CH₂)ₖ- mit k = 1 bis 18. Bevorzugt für k ist 1 bis 10, besonders bevorzugt sind -(CH₂)₂-, -(CH₂)₃-, (CH₂)₄-, (CH₂)₆- und -(CH₂)₈-.

Verzweigte C₁-C₁₈-Alkylengruppen für A sind beispielsweise: 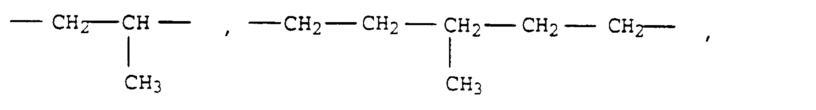 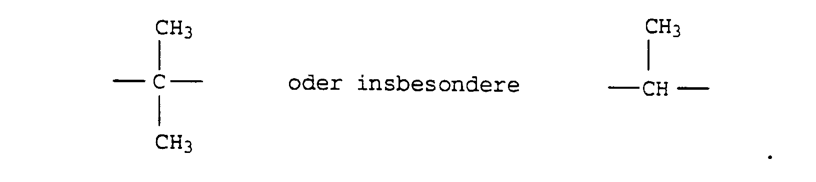 C₂- bis C₁₈-Alkenylen(oxy)gruppen für A sind beispielsweise: 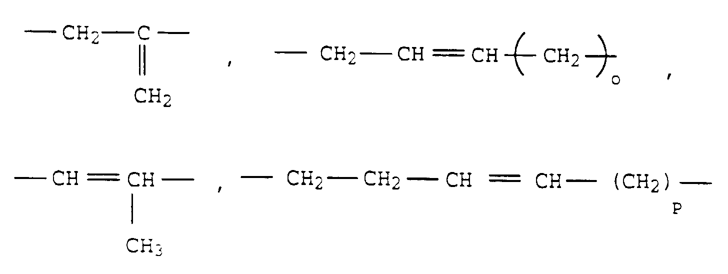 oder

-O-CH₂-CH=CH-CH₂-O-

mit o = 0 bis 15 und p 1 bis 14.

Bevorzugt sind Alkenylengruppen mit o = 1 und besonders bevorzugt sind

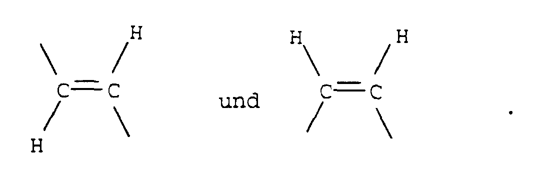

Durch bis zu 8, insbesondere bis zu 5, vor allem bis zu 3 nicht benachbarte Sauerstoffatome oder -NR¹- unterbrochenes C₁- bis C₁₈-Alkylen(oxy) kann beispielsweise sein: 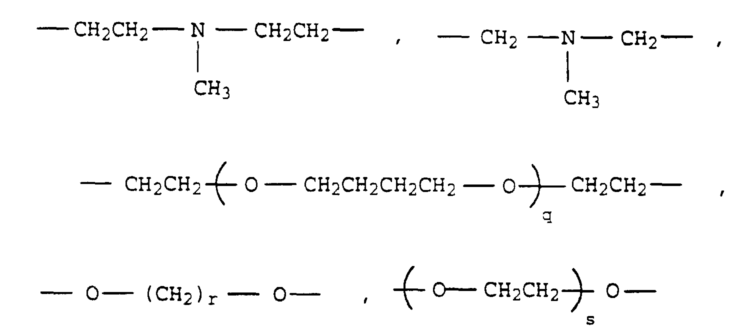 oder 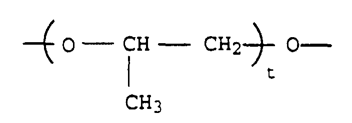 mit q = 1 bis 3, r= 2 bis 18, s = 1 bis 9 und t = 1 bis 6.
Bevorzugt wird r = 2 bis 6 und insbesondere 4 oder 6.
Bevorzugt wird s = 1 bis 3 und insbesondere 1 oder 3.
Bevorzugt wird t = 1 bis 3 und insbesondere 1.

Gegebenenfalls substituierte C₃- bis C₁₂-cycloalkylen(oxy)gruppen für A sind beispielsweise: 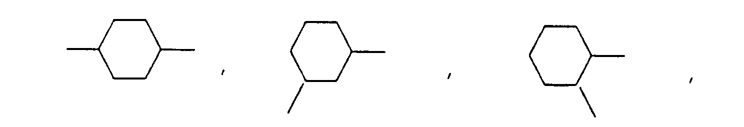 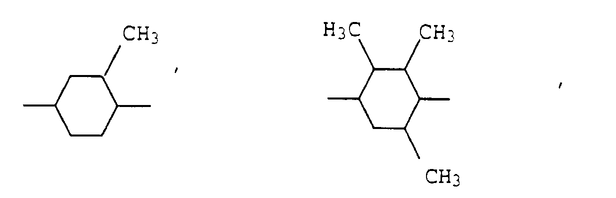 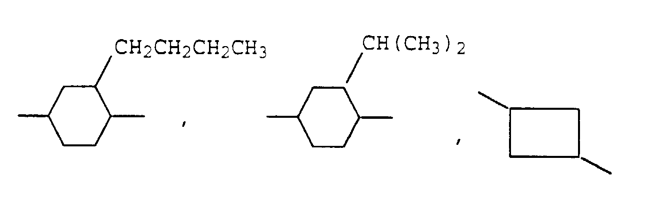 oder 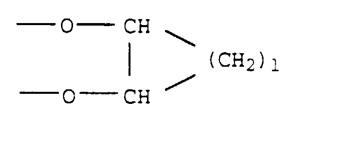 mit 1 = 1 bis 10, wobei 1 insbesondere 3 oder 9 ist. Eine besonders bevorzugte Cycloalkylengruppe ist

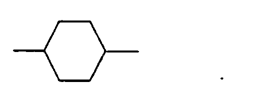

Gegebenenfalls substituierte C₆- bis C₁₈-Cycloalkyl-alky-len(oxy)gruppen für A sind beispielsweise: 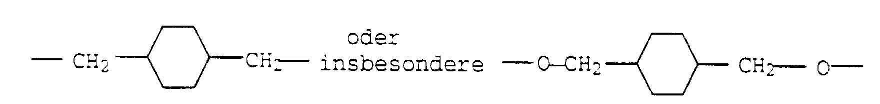 Gegebenenfalls substituierte Phenylen, Biphenylen oder Naphthylengruppen für A sind beispielsweise:

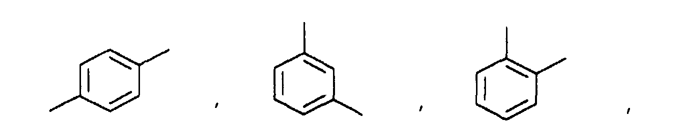

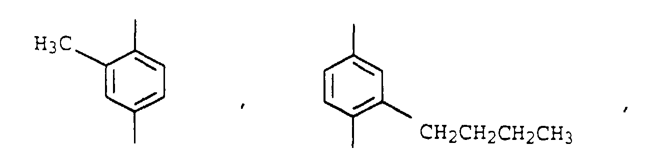

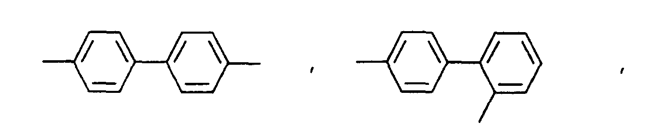

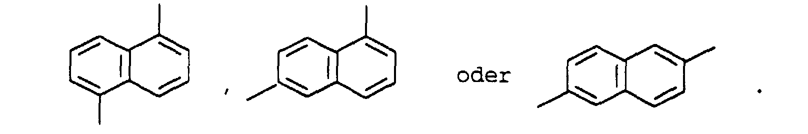

Bevorzugt werden hiervon: 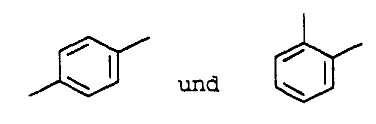 Zweibindige gesättigte oder ungesättigte heterocyclischee Reste für A leiten sich vor allem vom Thiophen, Furan oder Pyridin, daneben aber auch beispielsweise von Pyrrolidin, Imidazol, Thiazol oder Pyrazin ab.

Beispiele hierfür sind:

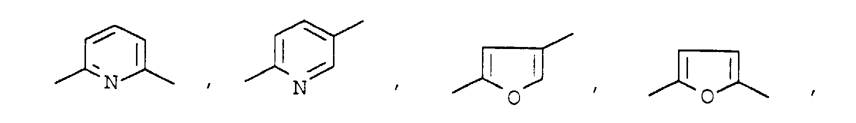

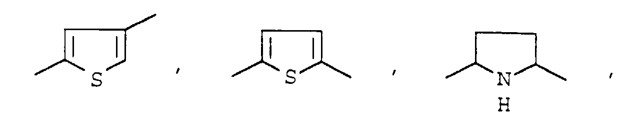

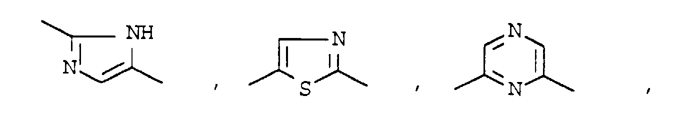

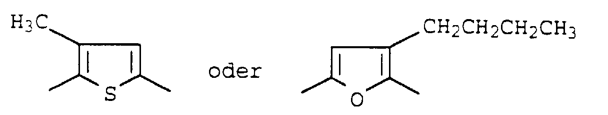

Besonders bevorzugt aus dieser Gruppe sind:

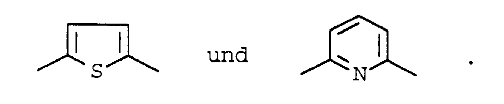

Gegebenenfalls substituierte C₇- bis C₂₂-Phenylalkylengruppen und -Diphenylalkylengruppen für A sind beispielsweise: 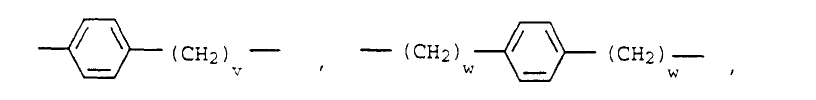 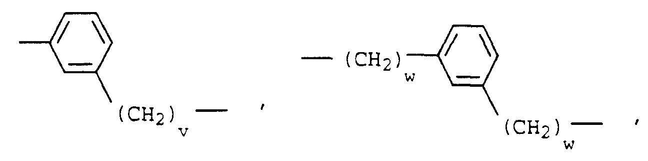 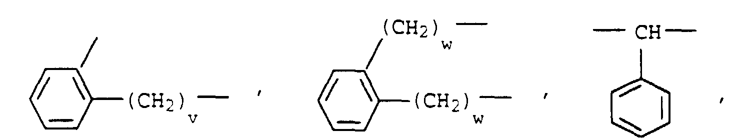 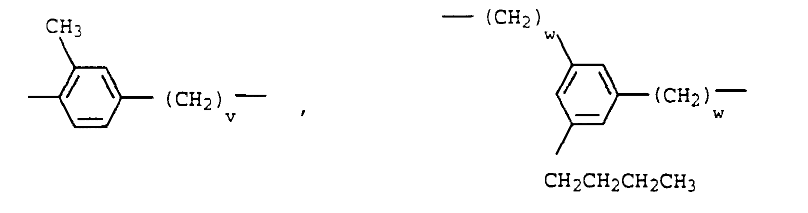 oder 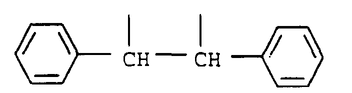 mit v = 1 bis 9 und w = 1 bis 6.
Bevorzugt für v und w ist jeweils 2 und insbesondere 1.

Als Substituenten an Ringen oder als Reste R¹ oder R² auftretende C₁- bis C₄- oder C₁- bis C₈-Alkylreste können z.B. sein: n-Propyl, iso-Propyl, n-Butyl, iso-Butyl, sec-Butyl, tert.-Butyl, n-Amyl, iso-Amyl, sec.-Amyl, tert.-Amyl, Neopentyl, n-Hexyl, n-Heptyl, n-Octyl und insbesondere Ethyl und Methyl. Treten solche Alkylreste als Substituenten an Ringen auf, liegen pro Ringsystem bis zu 3, insbesondere bis zu 2, vor allem ein Substituent vor.

C₂- bis C₁₈-Alkylengruppen für B und D können beispielsweise sein:

-(CH₂)ₓ-,

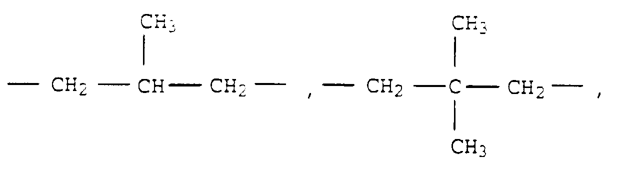

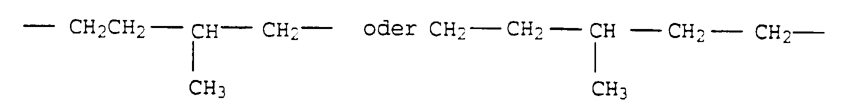

mit x = 2 bis 18.

Bevorzugt werden dabei Gruppen -(CH₂)ₓ- mit x = 2 bis 8 und insbesondere mit x = 6.

Durch bis zu 8, insbesondere bis zu 5, vor allem bis zu 3 nicht benachbarte Sauerstoffatome unterbrochene C₂- bis C₁₈-Alkylenreste für B und D können z.B. sein:

-CH₂CH₂-O-CH₂CH₂-, -CH₂CH₂CH₂-O-CH₂CH₂CH₂-

oder

-CH₂CH₂-O-CH₂CH₂-O-CH₂CH₂-O-CH₂CH₂-

C₄- bis C₁₈-Alkenylenreste für B und D können beispielsweise sein:

-CH₂-CH=CH-CH₂-

oder

-CH₂-CH₂-HC=CH-CH₂-CH₂-

Gegebenenfalls substituierte C₅- bis C₁₂-Cycloalkylenreste für B und D können beispielsweise sein: 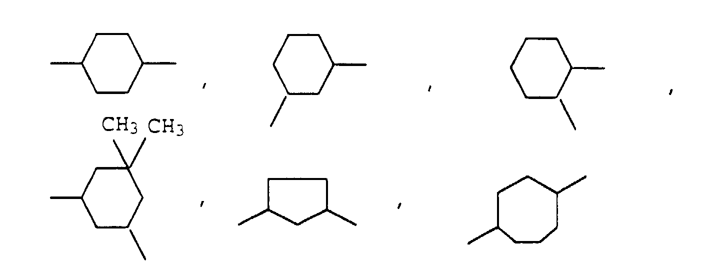 oder

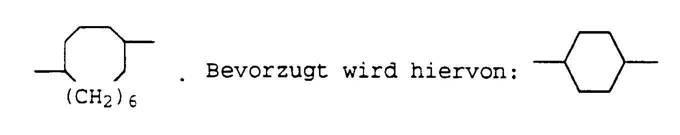

Gegebenenfalls substituiertes C₆- bis C₁₈-cycloalkyl-alkylen für B und D ist beispielsweise:

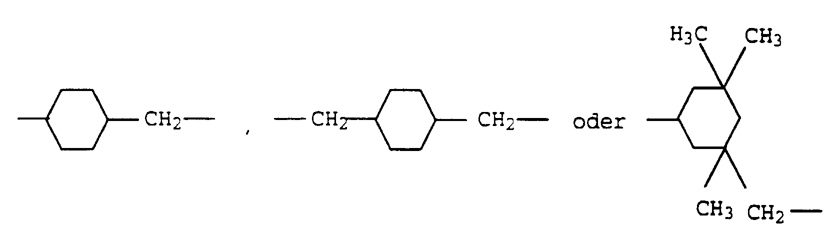

Gegebenenfalls substituierte Phenylen-, Bisphenylen- oder Naphthylengruppen für B sind beispielsweise:

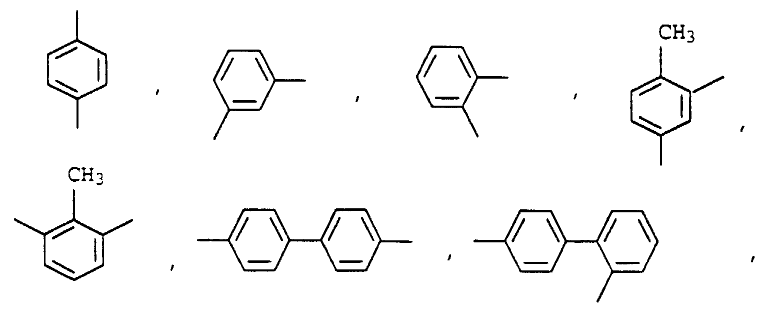

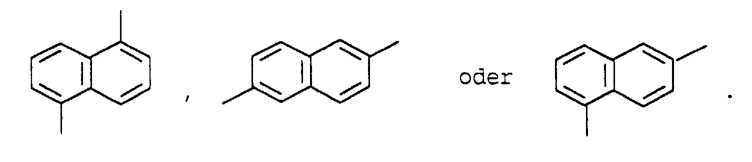

Gegebenenfalls substituierte C₇- bis C₂₂-Phenylalkylengruppen und -Diphenylalkylengruppen für B sind beispielsweise: 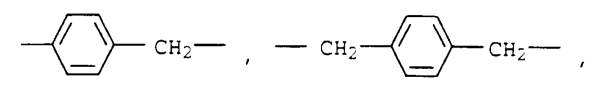 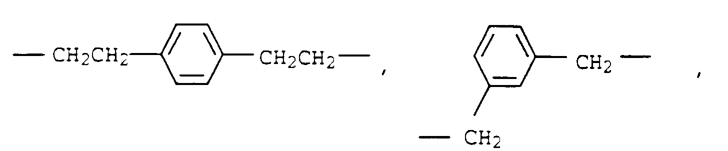 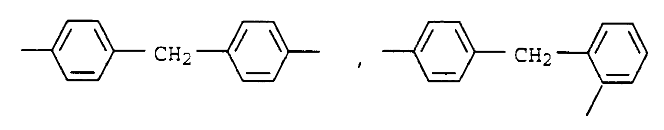 oder

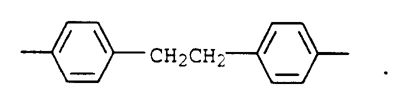

Gegebenfalls substituierte C₈- bis C₂₂-Phenylalkylengruppen für D sind beispielsweise: 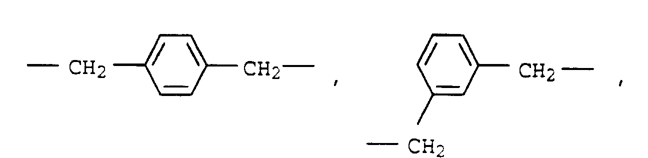 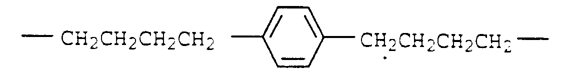 oder 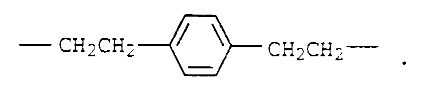 C₂- bis C₃₀-Alkylengruppen für E, die durch bis zu 14, insbesondere bis zu 8, vor allem bis zu 5 nicht benachbarte Sauerstoffatome oder -NR²-Brückenglieder unterbrochen sein können, sind beispielsweise:

-(CH₂)_{y}-,

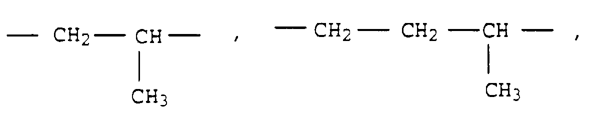

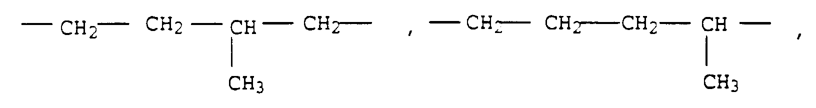

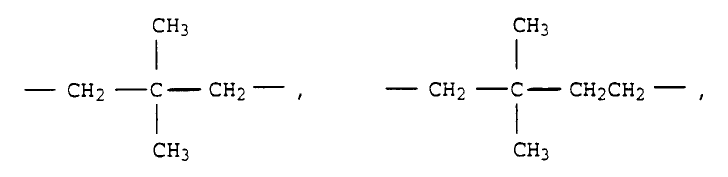

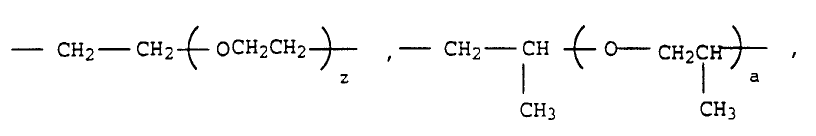

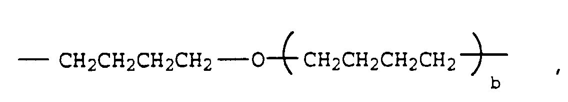

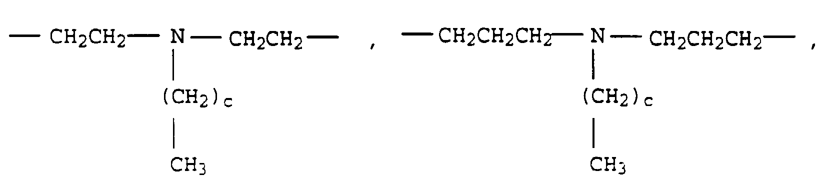

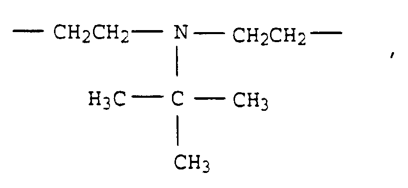

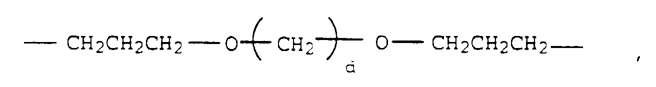

-CH₂CH₂-O-CH₂CH₂-O-CH₂CH₂CH₂-

oder 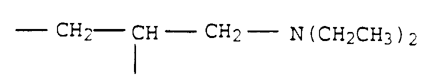 mit
y = 2 bis 30,
z = 1 bis 14,
a = 1 bis 9,
b = 1 bis 6,
c = 0 bis 7 und
d = 2 bis 24.

Bevorzugt für E werden hiervon:

-(CH₂)_{y}-

und 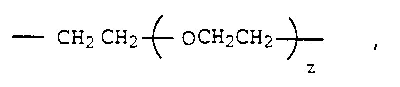 insbesondere

-(CH₂)₂- , -(CH₂)₄-

und

-(CH₂)₆-

Gegebenenfalls substituierte C₃- bis C₁₂-cycloalkylengruppen für E sind beispielsweise:

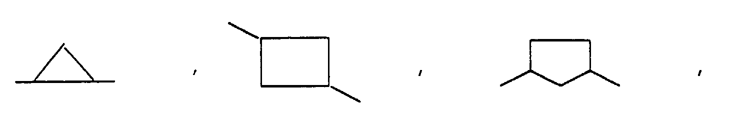

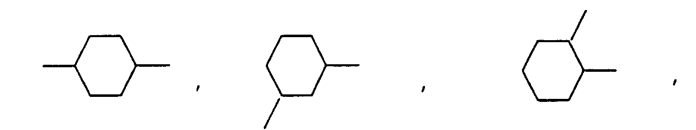

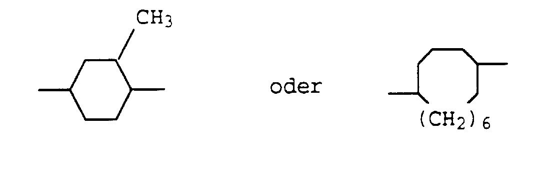

Besonders bevorzugt wird hiervon

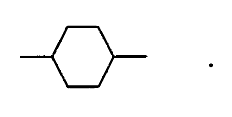

Gegebenenfalls substituierte Phenylen-, Biphenylen- oder Naphthylengruppen für E sind beispielsweise:

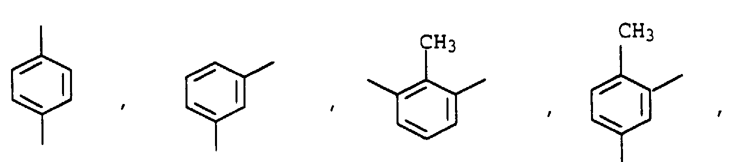

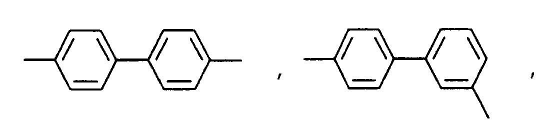

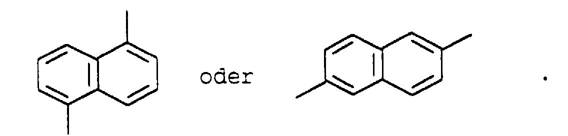

Gegebenenfalls substituierte C₇-C₂₂-Phenylalkylen- oder -Diphenylalkylengruppen für E sind beispielsweise: 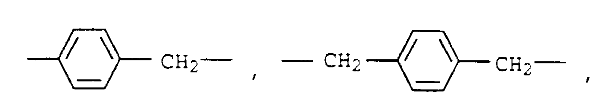 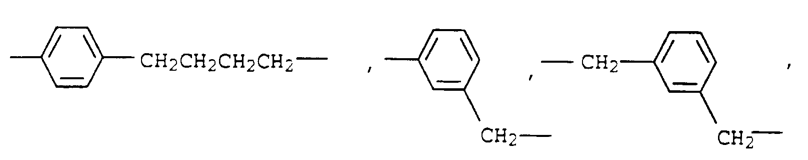 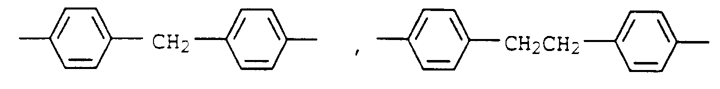 oder

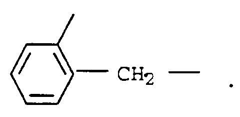

Gegebenfalls substituierte C₆- bis C₁₈-cycloalkyl-alkylengruppen für E sind beispielsweise: 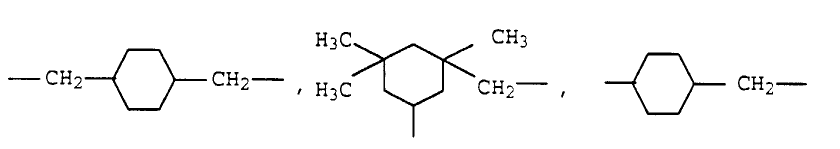 oder

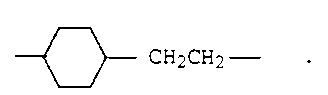

G kann beispielsweise Sauerstoff, -NH- , 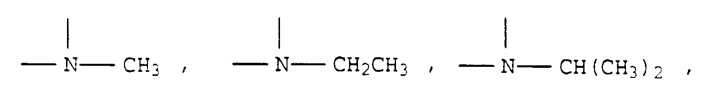 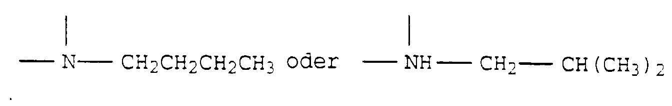 sein.

Bevorzugt wird hiervon für G Sauerstoff oder -NH-.

Der Pclymerisations- oder Kondensationsgrad n in den erfindungsgemäßen Polymeren liegt bei 2 bis 50, vorzugsweise 3 bis 30, insbesondere 4 bis 20, was größenordnungsmäßig einem mittleren Molekulargewicht von 800 bis 25000, vorzugsweise 1000 bis 15000, insbesondere 1500 bis 10000 entspricht.

Die freien Bindungen an den Kettenenden der allgemeinen Formeln II bis V sind wie üblich abgesättigt, in den meisten Fällen durch Wasserstoff.

Die erfindungsgemäßen Kondensations- und Additionspolymere lassen sich prinzipiell nach zwei unterschiedlichen Verfahren herstellen, die ebenfalls Gegenstand der vorliegenden Erfindung sind.

So kann man das N,N'-verbrückte Bis-tetramethylpiperidinol der Formel VII 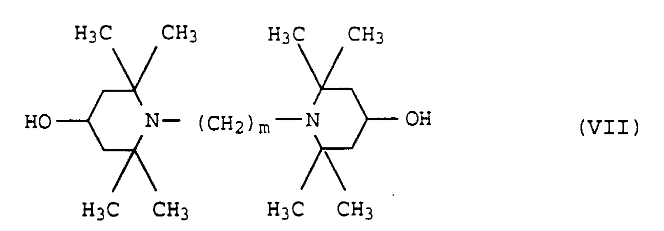 in der m die oben genannte Bedeutung hat, mit entsprechenden bifunktionellen OH-reaktiven Verbindungen umsetzen.

Zur Herstellung der Polyester II setzt man dabei das N,N'-verbrückte Bis-tetramethylpiperidinol VII mit Dicarbonsäurederivaten der allgemeinen Formel VIII 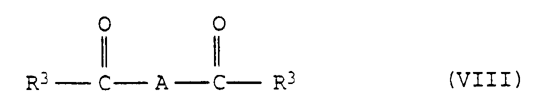 in der
- R³: für Hydroxyl, C₁- bis C₄-Alkoxy oder ein Halogenatom steht, wobei als Dicarbonsäurederivat VIII auch das intra- oder intermolekulare Anhydrid der zugrundeliegenden Dicarbonsäure eingesetzt werden kann, und
- A: die obengenannte Bedeutung hat,
um, wobei auch Mischungen der genannten Dicarbonsäurederivate VIII eingesetzt werden können.

Zur Herstellung der Polyurethane III setzt man dabei das N,N'-verbrückte Bis-tetramethylpiperidinol VII mit einem oder mehreren Diisocyanaten der allgemeinen Formel IX

O=C=N-B-N=C=O (IX)

in der B die oben genannte Bedeutung hat, um.

Zur Herstellung der Polyether IV setzt man dabei das N,N'-verbrückte Bis-tetramethylpiperidinol VII mit einem Dialkylierungsmittel der allgemeinen Formel X

R⁴-D-R⁴ (X)

in der
- R⁴: für ein Halogenatom oder eine Sulfonsäuregruppierung der For mel -O-SO₂-R⁵ steht, wobei R⁵ C₁- bis C₄-Alkyl, Phenyl oder Tolyl bedeutet, und
- D: die obengenannten Bedeutung hat,
um, wobei auch Mischungen der genannten Dialkylierungsmittel X eingesetzt werden können.

Zur Herstellung der Polycarbonate V setzt man dabei das N,N'-verbrückte Bis-tetramethylpiperidionol VII mit Kohlensäure-Derivaten der allgemeinen Formel XI 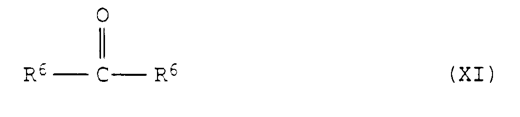 in der die beiden Reste R⁶ gleich oder verschieden sind und für Halogenatome, C₁- bis C₄-Alkoxy oder Phenoxy stehen, um, wobei auch Mischungen der genannten Kohlensäurederivate XI eingesetzt werden können.

Als C₁- bis C₄-Alkylgruppen für R⁵ und in R³ und R⁶ kommen n-Propyl, iso-Propyl, n-Butyl, iso-Butyl, sec.-Butyl und tert.-Butyl, vorzugsweise jedoch Ethyl und insbesondere Methyl in Betracht.

Unter Halogenatom ist neben Jod vor allem Brom und insbesondere Chlor zu verstehen.

Man setzt das Diol VII mit den bifunktionellen OH-reaktiven Verbindungen in der Regel in äquimolarem oder annähernd äquimolarem Verhältnis um.

Die beschriebene Umsetzung kann bei Temperaturen von üblicherweise 20°C bis 250°C, insbesondere 100°C bis 200°C, und normalerweise bei Atmosphärendruck mit oder ohne Lösungsmittel durchgeführt werden. Organische Lösungsmittel, die dabei verwendet werden können, sind beispielsweise aromatische Lösungsmittel wie Toluol, Xylol, Ethylbenzol, Mesitylen, Gemische höher alkylierter Aromaten, Chlorbenzol oder Dichlorbenzol, Amide wie Dimethylformamid, Formamid oder Dimethylacetamid, Amine wie Triethylamin, Tripropylamin oder Tributylamin, Ether wie Dipropylether, Dibutylether oder Diphenylether sowie Ester wie Benzoesäureethylester, Benzoesäuremethylester, Essigsäureethylester oder Essigsäurebutylester.

Bei der beschriebenen Herstellung der erfindungsgemäßen Polymeren, insbesondere der Urethane III, kann es zweckmäßig sein, einen Katalysator in den hierfür üblichen Mengen zu verwenden. Beispiele hierfür sind tertiäre Amine wie Triethylamin, Tripropylamin, Tributylamin oder Pyridin. Entsteht bei der Umsetzung Halogenwasserstoff, wie z.B. bei der Umsetzung von VII mit Dicarbonsäurehalogeniden VIII oder Dihalogeniden X, so kann eine Hilfsbase in vorteilhafter Weise den Halogenwasserstoff binden. Beispiele hierfür sind tertiäre Amine wie Triethylamin, Tripropylamin, Tributylamin oder Pyridin, Natrium-, Kalium- oder Lithiumhydroxid, Calciumhydroxid, Calcium- oder Magnesiumoxid oder vorzugsweise Natrium- oder Kaliumcarbonat sowie Natrium- oder Kaliumhydrogencarbonat. Derartige Hilfsbasen werden üblicherweise in Mengen von 0,5 bis 2,5 Äquivalenten zugesetzt.

Bei Umesterungsreaktionen wie bei der Umsetzung von VII mit Dicarbonsäureestern VIII ist es vorteilhaft, einen Umesterungskatalysator in den hierfür üblichen Mengen einzusetzen. Beispiele hierfür sind Alkoholate wie Natriummethylat, Natriumethylat oder Kalium-tert.-butanolat, Titanverbindungen wie Tetramethyltitanat, Tetraethyltitanat, Tetra-iso-propyltitanat oder Tetra-n-butyltitanat, Zinnverbindungen wie Dibutylzinndiacetat, Dibutylzinnoxid oder Dibutylzinndilaurat, Magnesiumoxid oder Calciumoxid.

Beim zweiten Verfahren zur Herstellung der erfindungsgemäßen Kondensations- und Additionspolymeren setzt man Bis-tetramethylpiperidinyloxy-Verbindungen der allgemeinen Formel XII 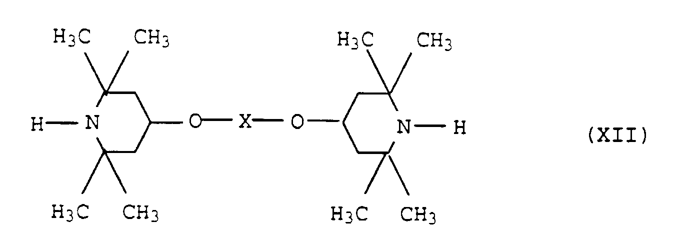 in der X sonstige Strukturelemente der herzustellenden Polymere bedeutet, mit einem cyclischen Carbonat der allgemeinen Formel XIII 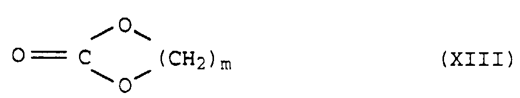 in der die Variable m für die Zahl 2 oder 3 steht, um.

Zur Herstellung der Polyester II setzt man dabei Bis-tetramethylpiperidinylester der allgemeinen Formel XIV 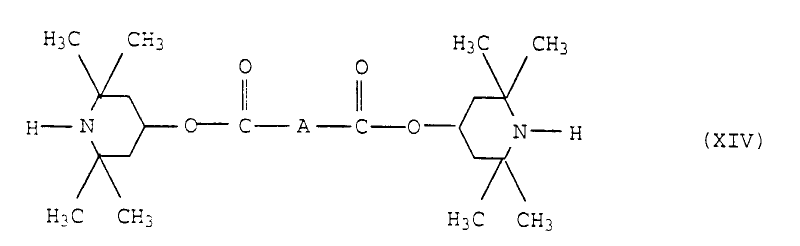 in der A die oben genannte Bedeutung hat, mit dem cyclischen Carbonat XIII um.

Zur Herstellung der Polyurethane III setzt man dabei Bis-tetramethylpiperidinylurethane der allgemeinen Formel XV 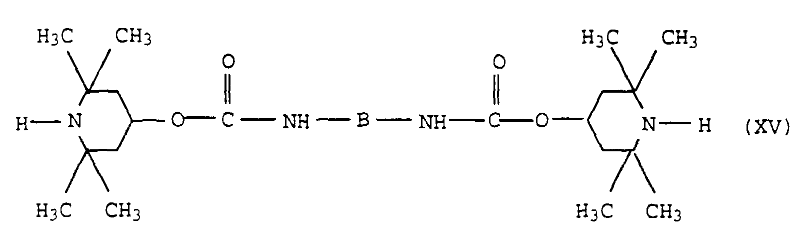 in der B die oben genannte Bedeutung hat, mit dem cyclischen Carbonat XIII um.

Zur Herstellung der Polyether IV setzt man dabei Bis-tetramethylpiperidinylether der allgemeinen Formel XVI 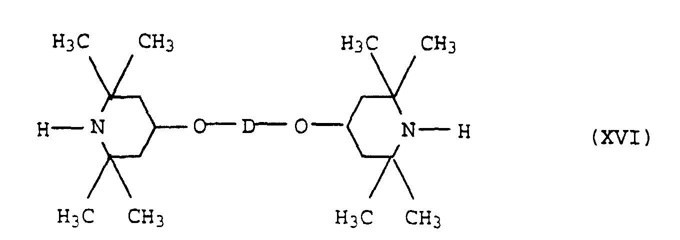 in der D die oben genannte Bedeutung hat, mit dem cyclischen Carbonat XIII um.

Zur Herstellung der Polycarbonate V setzt man dabei das Bis-tetramethylpiperidinylcarbonat der Formel XVII 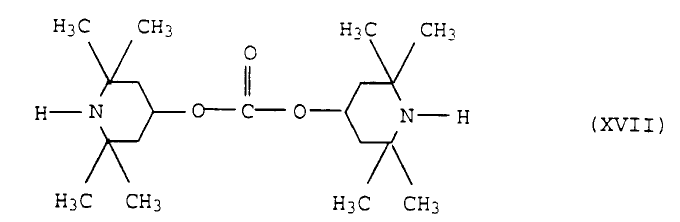 mit dem cyclischen Carbonat XIII um.

Als cyclisches Carbonat XIII eignet sich insbesondere Ethylencarbonat (m = 2).

Die Umsetzung wird in der Regel bei Temperaturen von 60 bis 200°C, vorzugsweise 100 bis 180°C, insbesondere 140 bis 165°C durchgeführt. Beim angegebenen Temperaturbereich ist die Umsetzung meist nach 5 bis 25 Stunden vollständig abgelaufen. Da bei der Umsetzung das Gas Kohlendioxid frei wird, arbeitet man zweckmäßigerweise bei Normaldruck oder bei vermindertem Druck.

Die Umsetzung kann mit oder ohne Lösungsmittel erfolgen. Als organische Lösungsmittel kommen insbesondere solche in Frage, die einen Siedepunkt über 60°C, vor allem über 100°C, insbesondere über 140°C besitzen. Als solche sind beispielsweise zu nennen:
- Alkohole wie Methanol, Ethanol, iso-Propanol, Ethylenglykol, n-Propanol, n-Butanol, iso-Butanol, tert.-Butanol und insbesondere 2-Ethylhexanol, n-Octanol oder Diethylenglykol;
- Amide wie Formamid, Dimethylformamid, Dimethylacetamid und insbesondere N-Methylpyrrolidinon;
- Aromaten wie Chlorbenzol, Toluol, Xylol, Ethylbenzol oder höher alkylierte Benzole;
- Ether wie Diisopropylether, Di-n-propylether, Diphenylether oder Tetrahydrofuran;
- tertiäre Amine wie Triethylamin, Tributylamin oder Pyridin;
- Polyethylenglykole oder Polypropylenglykole bis zu einem Molekulargewicht von ca. 1000.

Man kann auch Gemische der genannten organischen Lösungsmittel einsetzen.

In einer bevorzugten Ausführungsform verwendet man als Lösungsmittel einen Überschuß des als Reaktionspartner eingesetzten cyclischen Carbonates XIII. Hierbei beträgt das molare Verhältnis von Bis-tetramethylpiperidinyloxy-Verbindungen XII zu cyclischem Carbonat XIII 1 : 1,1 bis 1 : 20, vorzugsweise 1 : 1,5 bis 1 : 10, insbesondere 1 : 2 bis 1 : 6, wobei für die eigentliche Umsetzung 1 mol cyclisches Carbonat III pro Mol Ausgangsverbindung II benötigt werden.

In einer weiteren bevorzugten Ausführungsform des beschriebenen Verfahrens wird mit Hilfe eines Katalysators gearbeitet. Dabei wird der Katalysator in einer Menge von 0,01 bis 25 mol-%, vorzugsweise von 0,5 bis 10 mol-%, insbesondere von 1 bis 7 mol-%, bezogen auf die Menge an XII, eingesetzt. Eine Erhöhung der Katalysatormenge über 25 mol-% schadet der Reaktion nicht, bringt aber keine weiteren Vorteile. Die Katalysatoren kommen dabei aus folgenden Klassen:
(i) saure Katalysatoren, beispielsweise
   - Sulfonsäuren wie Methansulfonsäure, Trifluormethansulfonsäure, Benzolsulfonsäure oder p-Toluolsulfonsäure;
   - Mineralsäuren (anorganische Säuren) wie Schwefelsäure, Salzsäure oder Phosphorsäure;
   - Carbonsäuren wie Ameisen-, Essig-, Propion-, Butter-, Valerian-, Capron-, Capryl-, Caprin-, Stearin-, Öl-, Benzoe-, Methylbenzoe-, Phenylessig-, Zitronen-, Adipin-, Wein-, Nitrilotriessig- oder Ethylendiamintetraessigsäure;
(ii) schwermetallhaltige Katalysatoren, beispielsweise
   - Zinnverbindungen wie Dibutylzinnoxid, Dibutylzinndiacetat oder Dibutylzinndilaurat;
   - Titanate wie Tetramethoxytitanat, Tetra-iso-propoxytitanat oder Tetrabutoxytitanat;
(iii) organische Katalysatoren mit quaternisiertem Heteroatom, beispielsweise
   - Phosphoniumverbindungen wie die Chloride, Bromide oder Iodide der Kationen Methyltriphenylphosphonium, Ethyltriphenylphosphonium, Butyltriphenylphosphonium, Methyltributylphosphonium, Methyltriphenoxyphosphonium oder Tetrabutylphosphonium;
   - Ammoniumverbindungen wie die Chloride, Bromide, Iodide oder Hydroxide der Kationen Tetramethylammonium, Tetraethylammonium, Tetrabutylammonium, Methyltriphenylammonium, Methyltriethylammonium, Methyltributylammonium, Methyltrihexylammonium, Benzyltriethylammonium, Benzyltributylammonium, Benzyltriphenylammonium oder Benzyltrihexylammonium;
(iv) Halogenide, in der Regel in wasserfreier Form, beispielsweise
   - Alkalimetallhalogenide wie Lithiumiodid, Natriumbromid, Natriumiodid, Kaliumbromid oder Kaliumiodid;
   - Erdalkalimetallhalogenide wie Calciumchlorid, Magnesiumchlorid oder Magnesiumbromid;
   - Zinkhalogenide wie Zinkchlorid, Zinkbromid oder Zinkiodid.

Die erfindungsgemäßen Kondensations- und Additionspolymere eignen sich in hervorragender Weise zum Stabilisieren von organischem Material gegen die Einwirkung von Licht, Sauerstoff und Wärme. Sie sind auch wirksam als Metalldesaktivatoren. Sie werden dem zu stabilisierenden organischen Material in einer Konzentration von 0,01 bis 5 Gew.-%, vorzugsweise von 0,02 bis 2 Gew.-%, bezogen auf das organische Material, vor, während oder nach seiner Herstellung zugesetzt.

Unter organischem Material sind beispielsweise kosmetische Präparate wie Salben und Lotionen, Arzneimittelformulierungen wie Pillen und Zäpfchen, photographische Aufzeichnungsmaterialien, insbesondere photographische Emulsionen, oder Vorprodukte für Kunststoffe und Lacke, insbesondere jedoch Kunststoffe und Lacke selbst, zu verstehen.

Gegenstand der vorliegenden Erfindung ist außerdem gegen die Einwirkung von Licht, Sauerstoff und Wärme stabilisiertes organisches Material, insbesondere Kunststoffe und Lacke, welches die erfindungsgemäßen Polymeren in den oben angegebenen Konzentrationen enthält.

Zur Vermischung der erfindungsgemäßen Polymere vor allem mit Kunststoffen können alle bekannten Vorrichtungen und Methoden zum Einmischen von Stabilisierungsmitteln oder anderen Zusätzen in Polymere angewandt werden.

Das durch die erfindungsgemäßen Polymere stabilisierte organische Material kann gegebenenfalls noch weitere Additive enthalten, z.B. Antioxidantien, Lichtstabilisierungsmittel, Metalldesaktivatoren, antistatische Mittel, flammhemmende Mittel, Pigmente und Füllstoffe.

Antioxidantien und Lichtstabilisatoren, die neben den erfindungsgemäßen Polymeren zugesetzt werden können, sind z.B. Verbindungen auf der Basis sterisch gehinderter Phenole oder Schwefel oder Phosphor enthaltende Costabilisatoren.

Als derartige phenolische Antioxidationsmittel seien beispielsweise 2,6-Di-tert.-butyl-4-methylphenol, n-Octadecyl-β-(3,5-di-tert.-butyl-4-hydroxyphenyl)-Propionat, 1,1,3-Tris-(2-methyl-4-hydroxy-5-tert.-butylphenyl)-butan, 1,3,5-Trimethyl-2,4,6-tris-(3,5-di-tert.-butyl-4-hydroxybenzyl)-benzol, 1,3,5-Tris-(3,5-di-tert.-butyl-4-hydroxybenzyl)-isocyanurat, 1,3,5-Tris-[β-(3,5-di-tert.-butyl-4-hydroxybenzyl)-propionylethyl]-iso-cyanurat, 1,3, 5-Tris-(2,6-dimethyl-3-hydroxy-4-tert.-butylbenzyl)-isocyanurat und Pentaerythrit-tetrakis-[β-3,5-di-tert.-butyl-4-hydroxy-phenyl)-propionat] erwähnt.

Als phosphorhaltige Antioxidantien kommen beispielsweise Tris-(nonylphenyl)-phosphit, Distearylpentaerythritdiphosphit, Tris-(2,4-di-tert.-butyl-phenyl)-phosphit, Distearylpentaerythritdiphosphit, Tris-(2-tert.-butyl-4-methylphenyl)-phosphit, Bis-(2,4-di-tert.-butyl-phenyl)-pentaerythritdiphosphit und Tetrakis-(2,4-di-tert.-butylphenyl)-4,4'-biphenylendiphosphit in Betracht.

Als Schwefel enthaltende Antioxidationsmittel seien beispielsweise Dilaurylthiodipropionat, Dimyristylthiodipropionaz, Distearylthiodipropionat, Pentaerythrittetrakis-β-laurylthiopropionat) und Pentaerythrittetrakis-(-β-hexylthiopropionat) genannt. Weiterhin können Thiobisphenole wie 3,3'-Di-tert.-butyl-4,4'-dihydroxy-2,2'-dimethyl-diphenylsulfid zugesetzt werden.

Weitere Antioxidantien und Lichtstabilisatoren, die zusammen mit den erfindungsgemäßen Polymeren verwendet werden können, sind z.B. 2-(2'-Hydroxyphenyl)-benztriazole, 2-Hydroxybenzophenone, Arylester von Hydroxybenzoesäuren, α-Cyanozimtsäurederivate, Benzimidazolcarbonsäureanilide, Nickelverbindungen oder Oxalsäuredianilide.

Eine besonders gute Stabilisierung erhält man, wenn zu den erfindungsgemäßen Polymeren noch mindestens ein weiterer Lichtstabilisator aus der Verbindungsklasse der sterisch gehinderten Amine in üblicher Konzentration zugesetzt wird.

Als weitere sterisch gehinderte Amine kommen hierfür z.B. in Betracht: Bis-(2,2,6,6-tetramethylpiperidyl)-sebacat, Bis-(1,2,2,6,6-pentamethylpiperidyl)-sebacat, das Kondensationsprodukt von 1-Hydroxyethyl-2,2,6,6-tetramethyl-4-hydroxypiperidin mit Bernsteinsäure, das Kondensationsprodukt von N,N'-(2,2,6,6-tetramethylpiperidyl)-hexamethylendiamin mit 4-tert.-Octylamino-2,6-dichlor-1,3,5-triazin, Tris-(2,2,6,6-tetramethylpiperidyl)-nitrilotriacetat, Tetrakis-(2,2,6,6-tetramethyl-4-piperidyl)-1,2,3,4-butan-tetracarbonsäure, 1,1'-(1,2-Ethandiyl)-bis-(3,3,5,5-tetramethylpiperazinon), die Kondensationsprodukte von 4-Amino-2,2,6,6-tetramethylpiperidinen mit Tetramethylolacetylendiharnstoffen.

Als Kunststoffe, die durch die erfindungsgemäßen Polymeren stabilisiert werden können, seien beispielsweise genannt:
Polymere von Mono- und Diolefinen, wie z.B. Polyethylen niedriger oder hoher Dichte, Polypropylen, lineares Polybuten-1, Polyisopren, Polybutadien sowie Copolymerisate von Mono- oder Diolefinen oder Mischungen der genannten Polymeren;
Copolymerisate von Mono- oder Diolefinen mit anderen Vinylmonomeren, wie z.B. Ethylen-Alkylacrylat-Copolymere, Ethylen-Alkylmethacrylat-Copolymere, Ethylen-Vinylacetat-Copolymere oder Ethylen-Acrylsäure-Copolymere;
Polystyrol sowie Copolymere von Styrol oder α-Methylstyrol mit Dienen und/oder Acrylderivaten, wie z.B. Styrol-Butadien, Styrol-Acrylnitril (SAN), Styrol-Ethylmethacrylat, Styrol-Butadien-Ethylacrylat, Styrol-Acrylnitril-Methacrylat, Acrylnitril-Butadien-Styrol (ABS) oder Methylmethacrylat-Butadien-Styrol (MBS);
Halogenhaltige Polymere, wie z.B. Polyvinylchlorid, Polyvinylfluorid, Polyvinylidenfluorid sowie deren Copolymere;
Polymere, die sich von α,β-ungesättigten Säuren und deren Derivaten ableiten, wie Polyacrylate, Polymethacrylate, Polyacrylamide und Polyacrylnitrile;
Polymere, die sich von ungesättigten Alkoholen und Aminen bzw. von deren Acrylderivaten oder Acetalen ableiten, z.B. Polyvinylalkohol und Polyvinylacetat;
Polyurethane, Polyamide, Polyharnstoffe, Polyphenylenether, Polyester, Polycarbonate, Polysulfone, Polyethersulfone und Polyetherketone.

Weiterhin können mit den erfindungsgemäßen Polymeren Lacküberzüge stabilisiert werden, z.B. Industrielackierungen. Unter diesen sind Einbrennlackierungen, unter diesen wiederum Fahrzeuglackierungen, vorzugsweise Zweischichtlackierungen, besonders hervorzuheben.

Die erfindungsgemäßen Polymeren können in fester oder gelöster Form dem Lack zugesetzt werden. Ihre gute Löslichkeit in Lacksystemen ist dabei von besonderem Vorteil.

Bevorzugt werden die erfindungsgemäßen Polymeren zum Stabilisieren von Polyethylen und insbesondere von Folien hieraus verwendet. Ein weiteres bevorzugtes Einsatzgebiet ist die Stabilisierung von Polypropylen und Polyamid, insbesondere von Fasern hieraus.

Die erfindungsgemäßen Polymere zeichnen sich durch eine gute Verträglichkeit mit den üblichen Kunststoffarten und durch eine gute Löslichkeit und eine ausgezeichnete Verträglichkeit in den üblichen Lacksystemen aus. Sie haben in der Regel keine oder nur eine sehr geringe Eigenfarbe, sind bei den üblichen Kunststoff- und Lack-Verarbeitungstemperaturen stabil und nicht flüchtig und bewirken vor allen Dingen eine lange Schutzdauer der mit ihnen behandelten Materialien.

Der Erfindung wird durch die nachstehenden Beispiele weiter erläutert. Die Herstellbedingungen wurden nicht optimiert.

### Herstellungsbeispiele

Das als Lösungsmittel eingesetzte Solvesso® 100 ist ein handelsübliches Gemisch aromatischer Kohlenwasserstoffe mit einem Siedebereich von 163°C bis 170°C.

Der Polymerisations- oder Kondensationsgrad n liegt bei den nachfolgenden Beispielen jeweils im Bereich von etwa 2 bis etwa 25.

### Beispiel 1

628 g (4,0 mol) 2,2,6,6-Tetramethylpiperidin-4-ol, 880 g (10,0 mol) Ethylencarbonat und 30 g (0,08 mol) Tetrabutylammoniumiodid wurden 13 h auf 155°C und weitere 6 h auf 165°C erhitzt, wobei sich CO₂ abspaltete. Man ließ abkühlen und gab bis 130°C unter Siedekühlung langsam 1 1 Wasser zu. Danach ließ man unter Rühren abkühlen, saugte den entstandenen Niederschlag bei Raumtemperatur ab und wusch mit Wasser nach, bis das Filtrat farblos war. Nach dem Trocknen erhielt man 603 g der Verbindung des Diols der Formel VII (m = 2) als farblosen Feststoff vom Schmp. 264-267°C.

### Beispiel 2

51 g der Verbindung aus Beispiel 1, 17,7 g Dimethyloxalat und 1,5 ml Dibutylzinndiacetat wurden in 150 ml Solvesso 100 5,5 h auf 160°C und anschließend 8 h auf 165°C erhitzt. Dabei destillierten ca. 8,5 g Methanol ab. Nach Abkühlen auf 90°C wurde mit 200 ml Methanol verdünnt, nach Abkühlen auf Raumtemperatur wurde abgesaugt, mit Methanol gewaschen und getrocknet. Man erhielt 43 g der Verbindung der Formel 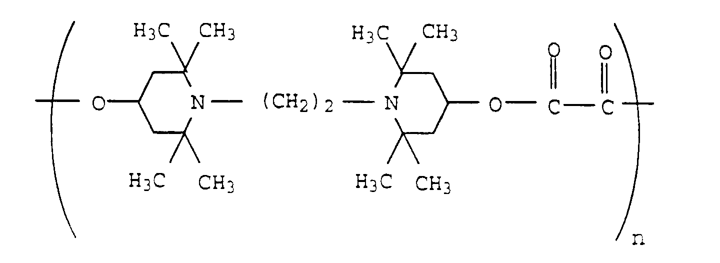 als farblosen Feststoff vom Schmp. >300°C.

### Beispiel 3

51 g der Verbindung aus Beispiel 1, 21 g Fumarsäuredimethylester und 1 g Dibutylzinndiacetat wurden in 150 ml Solvesso 100 1 h auf 160°C unter Abdestillieren von Methanol erhitzt. Anschließend wurden weitere 100 ml Solvesso 100 zugegeben und 12,5 h auf 165°C erwärmt. Nach Abkühlen auf 80°C wurde mit 250 ml Methanol verdünnt, auf Raumtemperatur abgekühlt, abgesaugt, mit Methanol gewaschen und getrocknet. Man erhielt 60,7 g der Verbindung der Formel 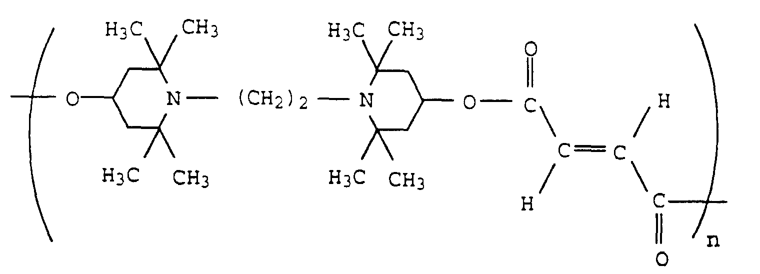 vom Schmp. >310°C.

### Beispiel 4

51 g der Verbindung aus Beispiel 1, 21 g Maleinsäuredimethylester und 1 g Dibutylzinndiacetat wurden in 150 ml Solvesso 100 unter Abdestillieren von Methanol 14,5 h auf 165°C erhitzt. Nach Abkühlen auf 80°C wurde wie in Beispiel 3 aufgearbeitet, man erhielt 51,1 g der Verbindung der Formel 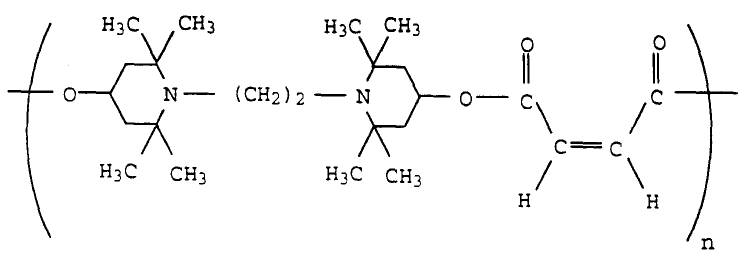 als farblosen Feststoff vom Schmp. 199°-202°C.

### Beispiel 5

51 g der Verbindung aus Beispiel 1, 25 g Itaconsäuredimethylester aund 1,5 ml Dibutylzinndiacetat wurden wie in Beispiel 4 14 h auf 165°C erhitzt. Nach Verdünnen mit 300 ml Methanol wurde wie in Beispiel 4 aufgearbeitet. Man erhielt 62 g der Verbindung der Formel 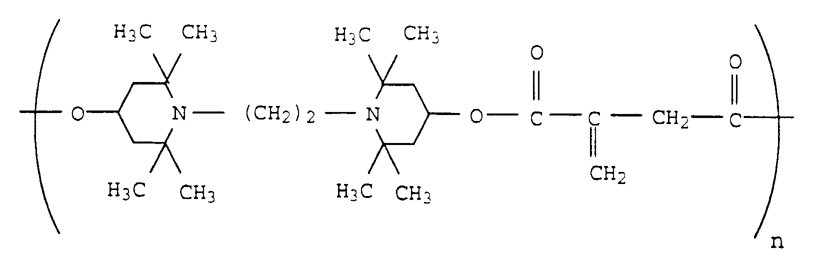 als farblosen Feststoff vom Schmp. 300°C.

### Beispiel 6

51 g des Produktes aus Beispiel 1, 19,8 g Malonsäuredimethylester und 0,5 g Dibutylzinnoxid wurden unter Abdestillieren von Methanol in 150 ml Solvesso 100 4,5 h auf 155°C, 2,5 h auf 160°C und anschließend 7 h auf 165°C erhitzt. Nach Zugabe von 200 ml Methanol wurde wie in Beispiel 5 aufgearbeitet. Man erhielt 54,9 g der Verbindung der Formel 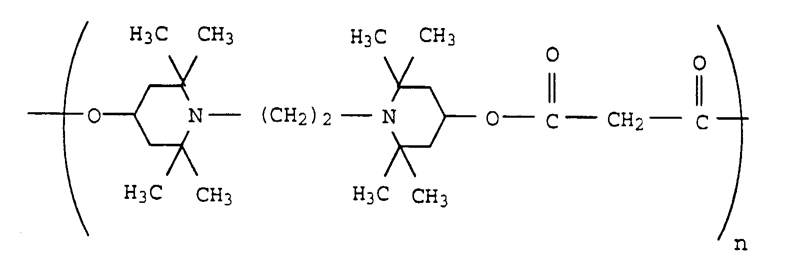 als farblosen Feststoff vom Schmp. 180-185°C.

### Beispiel 7

51 g des Produktes aus Beispiel 1, 36,1 g Phenylmalonsäurediethylester und 1,5 g Dibutylzinndiacetat wurden unter Abdestillieren von Ethanol in 150 ml Solvesso 100 16 h auf 165°C erhitzt. Nach Aufarbeitung wie in Beispiel 5 erhielt man 64 g der VErbindung der Formel 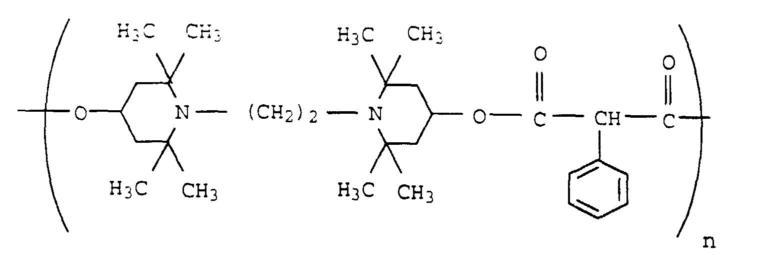 als farblosen Feststoff vom Schmp. 242-245°C.

### Beispiel 8

51 g des Produktes aus Beispiel 1, 21,9 g Bernsteinsäuredimethylester und 0,5 g Dibutylzinnoxid wurden unter Abdestillieren von Methanol in 150 ml Solvesso 100 4,5 h auf 155°C, 2,5 h auf 160°C, 5,5 h auf 165°C und nach Zugabe von weiteren 60 ml Solvesso 100 1,5 h auf 170°C erhitzt. Nach Aufarbeitung wie in Beispiel 2 erhielt man 59,5 g der Verbindung der Formel 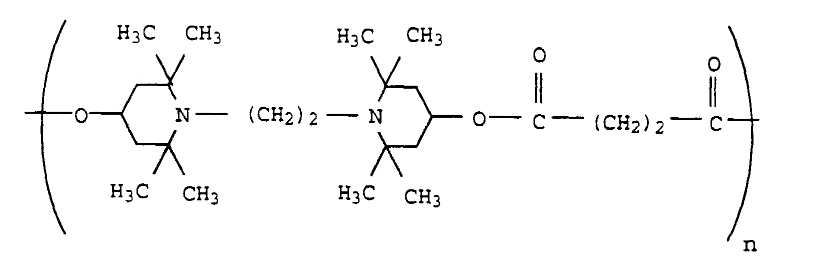 als farblosen Feststoff vom Schmp. 303-305°C.

### Beispiel 9

51 g des Produktes aus Beispiel 1, 24 g Glutarsäuredimethylester und 1,5 ml Dibutylzinndiacetat werden in 150 ml Solvesso 16 h bei 165°C umgesetzt. Nach Aufarbeitung wie in Beispiel 5 erhielt man 60 g der Verbindung der Formel 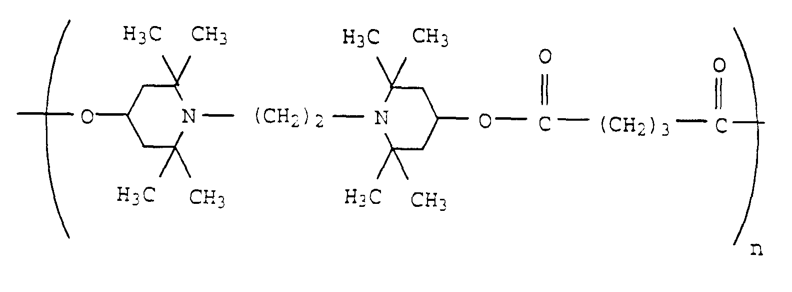 als farblosen Feststoff vom Schmp. 278-283°C.

### Beispiel 10a

51 g des Produktes aus Beispiel 1, 26,1 g Adipinsäuredimethylester und 0,5 g Dibutylzinnoxid wurden unter Abdestillation von Methanol in 150 ml Solvesso 100 8 h auf 165°C erhitzt. Nach Aufarbeitung wie in Beispiel 3 erhielt man 57,4 g der Verbindung der Formel 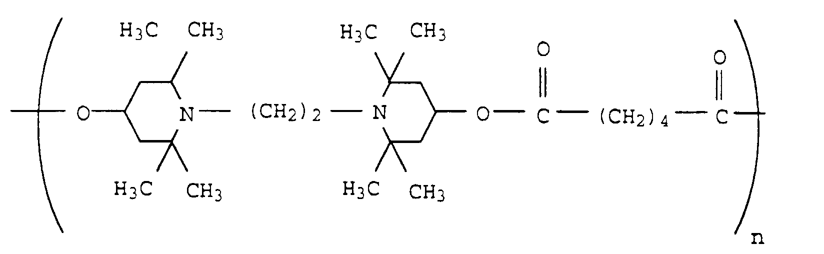 als farblosen Feststoff vom Schmp. 242-245°C.

### Beispiel 10b

Der gleiche Ansatz wie in Beispiel 10a wurde 25 h auf 165°C erhitzt. Analoge Aufarbeitung ergab 65,8 g eines Polyesters derselben Formel wie bei Beispiel 10a nur mit einem etwas höheren Wert für n als farblosen Feststoff vom Schmp. 254-255°C.

### Beispiel 11

51 g des Produktes aus Beispiel 1, 32,4 g Pimelinsäurediethylester und 1,5 ml Dibutylzinndiacetat wurden in 150 ml Solvesso 100 15 h auf 165°C unter Abdestillieren von Ethanol erhitzt. Nach Aufarbeitung wie in Beispiel 2 erhielt man 58 g der Verbindung der Formel 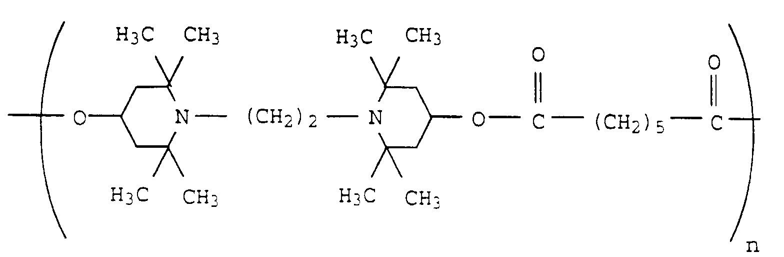 als farblosen Feststoff vom Schmp. 138-142°C.

### Beispiele 12a-f

51 g des Produktes aus Beispiel 1, 34,5 g Sebacinsäuredimethylester und unterschiedliche Katalysator wurden in 150 ml Solvesso 100 umgesetzt und analog Beispiel 2 aufgearbeitet. Die Ergebnisse sind in Tabelle 1 zusammengefaßt. Als Produkt entstand in allen Fällen eine Verbindung der Formel 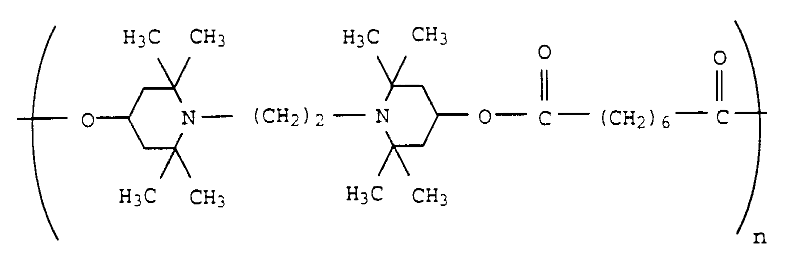 mit jeweils leicht differierendem Wert für n.

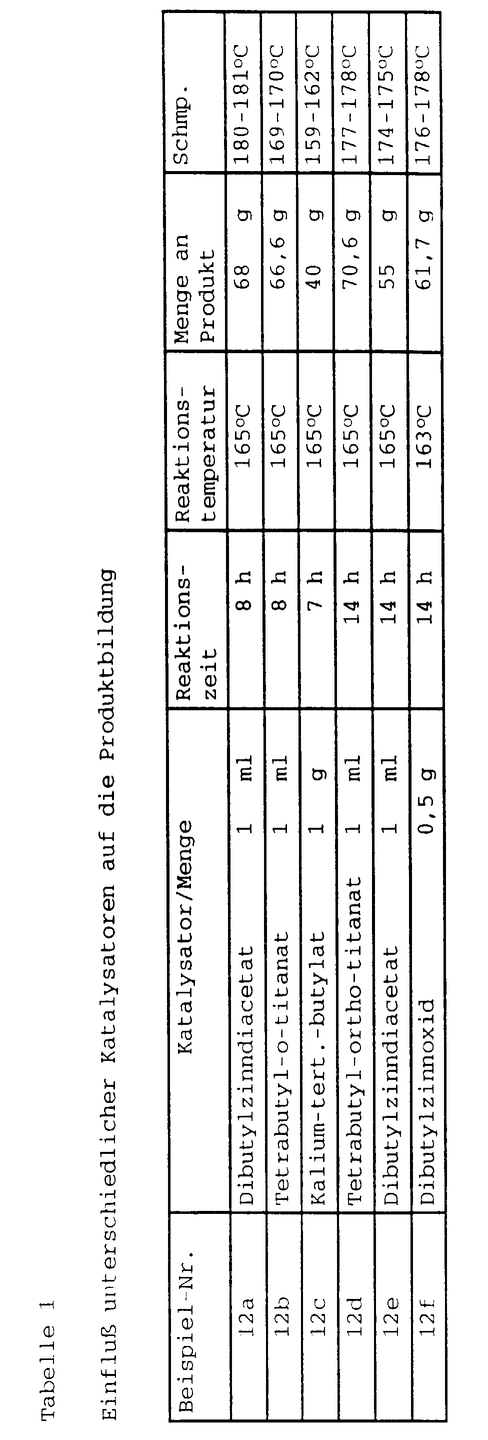

### Beispiel 13

51 g des Produktes aus Beispiel 1, 29,1 g Terephthalsäuredimethylester und 1,5 ml Dibutylzinndiacetat wurden unter Abdestillieren von Methanol in 150 ml Solvesso 100, 5,5 h auf 160°C erhitzt. Nach Zugabe von 75 ml Solvesso 100 wurde weitere 8 h auf 165°C erhitzt. Nach Aufarbeitung wie in Beispiel 1 erhielt man 68,8 g der Verbindung der Formel 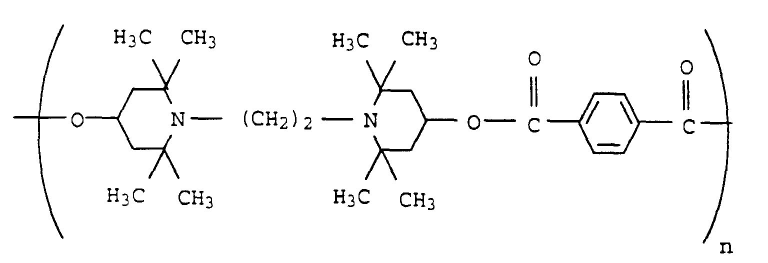 als farblosen Feststoff vom Schmp. >310°C.

### Beispiel 14

51 g des Produktes aus Beispiel 1, 29,1 g Phthalsäuredimethylester und 1,5 ml Dibutylzinndiacetat wurden wie in Beispiel 13 umgesezt und aufgearbeitet. Man erhielt 50 g des Polyesters der Verbindung der Formel 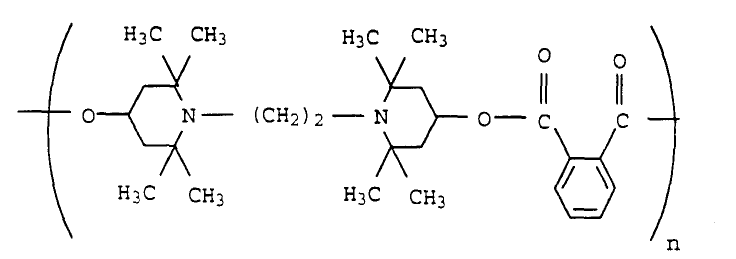 als farblosen Feststoff vom Schmp. 292-297°C.

### Beispiel 15

51 g des Produktes aus Beispiel 1, 17,7 g Dimethylcarbonat und 3,5 ml Dibutylzinnoxid wurden in 15 ml Solvesso 100 auf 150°C erhitzt, wobei das abdestillierte Diethylcarbonat ständig zur Reaktionsmischung zurückgegeben wurde. Anschließend wurde noch 11 h auf 165°C erhitzt und analog Beispiel 2 aufgearbeitet. Man erhielt 47,8 des Polycarbonats der Formel 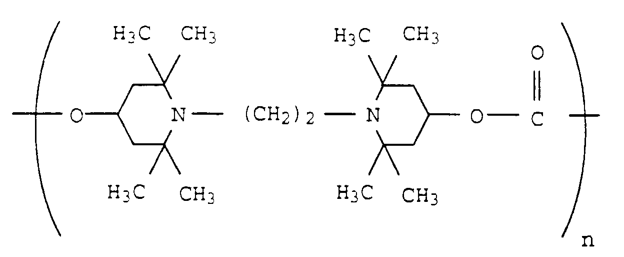 als farblosen Feststoff vom Schmp. > 300°C.

### Beispiel 16

51 g des Produktes aus Beispiel 1, 25,2 g Hexamethylendiisocyanat-1,6 und 5 g Tributylamin wurden in 150 ml Solvesso 100 3 h auf 70°C, 2 h auf 90°C, 1 h auf 110°C, 5,5 h auf 130°C, 2 h auf 155 h und 7 h auf 165°C erhitzt. Nach Zugabe von Methanol wurde 2 h unter Rückfluß erhitzt und wie üblich aufgearbeitet. Man erhielt 56,5 g des Polyurethans der Formel 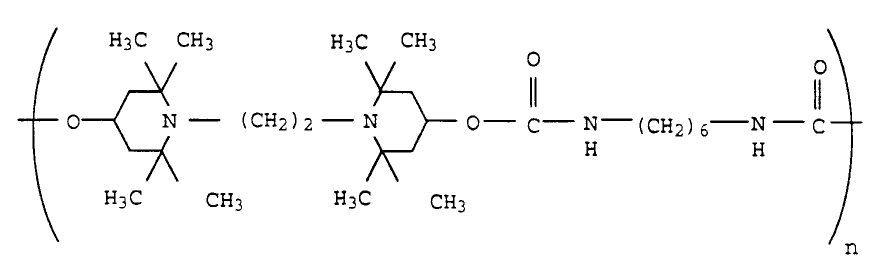 als farblosen Feststoff vom Schmp. 208-212°C.

### Beispiel 17

51 g des Produktes aus Beispiel 1, 37,5 g 4,4'-Diphenylmethan-diisocyanat und 5 g Tributylamin wurden in 250 ml Solvesso 100 7 h auf 145°C und weitere 7 h auf 165°C erhitzt. Nach Zugabe von Methanol wurde abfiltriert und wie üblich aufgearbeitet. Man erhielt 82 g des Polyurethans der Formel 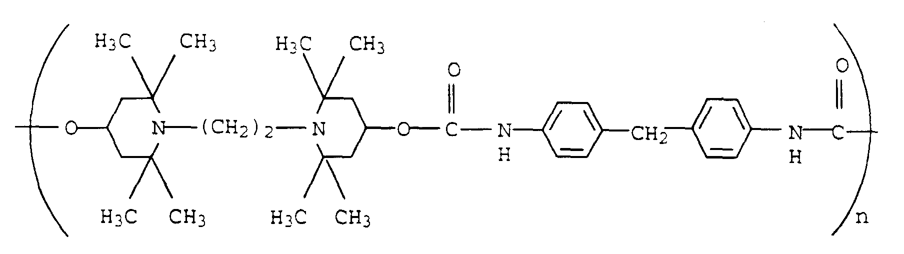 als farblosen Feststoff vom Schmp. 291-295°C.

### Beispiel 18

Der zu Beispiel 17 analoge Versuch mit einem 1:1-Gemisch aus 4,4'-Diphenylmethan-diisocyanat und 2,4'-Diphenylmethan-diisocyanat lieferte 82,6 g des analogen Polyurethans vom
Schmp. 238-243°C.

### Beispiele 19

51 g des Produktes aus Beispiel 1, 26,1 g eines 8:2-Gemisches aus 2,4-Toluylendiisocyanat und 2,6-Toluylendiisocyanat sowie 5 g Tributylamin wurden in 150 ml Solvesso 100 analog Beispiel 17 umgesetzt. Man erhielt 72 g des entsprechenden Polyurethans als farblosen Feststoff vom Schmp. 248-253°C.

### Beispiel 20

38,25 g des Produktes aus Beispiel 1, 4,42 g 1,6-Hexandiol, 21,9 Bernsteinsäuredimethylester und 1 ml Dibutylzinndiacetat wurden in 150 ml Solvesso 100 14 h auf 165°C erhitzt. Nach Aufarbeitung wie in Beispiel 2 erhielt man 44,5 g des gemischten Polyesters als farblosen Feststoff vom Schmp. 293-297°C.

### Beispiel 21

38,25 g des Produktes aus Beispiel 1, 4,42 g 1,6-Hexandiol, 26,10 g Adipinsäuredimethylester und 1 ml Dibutylzinndiacetat wurden in 150 ml Solvesso 100 wie in Beispiel 20 umgesetzt und aufgearbeitet. Man erhielt 50,4 g des gemischten Polyesters als farblosen Feststoff vom Schmp. 192-198°C.

### Beispiel 22a

38,25 g des Produktes aus Beispiel 1, 4,35 Cyclohexandiol-1,4, 26,1 g Adipinsäuredimethylester und 1,5 ml Dibutylzinndiacetat wurden in 150 ml Solvesso 100 wie in Beispiel 20 umgesetzt und aufgearbeitet. Man erhielt 52 g des gemischten Polyesters als farblosen Feststoff vom Schmp. 198-202°C.

### Beispiel 22b

34,0 g des Produktes aus Beispiel 1, 11,6 g cyclohexandiol-1,4, 34,8 g Adipinsäuredimethylester und 1,5 ml Dibutylzinndiacetat wurden in 125 ml Solvesso 100 analog Beispiel 20 umgesetzt und aufgearbeitet. Man erhielt 38,4 g des gemischten Polyesters als farblosen Feststoff vom Schmp. 172-176°C.

### Beispiel 23

34,5 g des Produktes aus Beispiel 1, 4,83 g 1,4-Cyclohexandimethanol, 19,65 g Bernsteinsäuredimethylester und 1,5 ml Dibutylzinndiacetat wurden in Solvesso 100 analog Beispiel 20 umgesetzt und aufgearbeitet. Man erhielt 41 g des gemischten Polyesters als farblosen Feststoff vom Schmp. 288-293°C.

### Beispiel 24

38,25 g des Produktes aus Beispiel 1, 5,4 g 1,4-Cyclohexandimethanol, 26,1 g Adipinsäuredimethylester und 1,5 ml Dibutylzinndiacetat wurden analog Beispiel 20 umgesetzt und aufgearbeitet. Man erhielt 53 g des gemischten Polyesters als farblosen Feststoff vom Schmp. 180-188°C.

### Beispiel 25a

38,25 g des Produktes aus Beispiel 1, 4,35 g Hexamethylendiamin-1,6, 26,1 g Adipinsäuredimethylester und 1,5 ml Dibutylzinndiacetat wurden in 150 ml Solvesso 100 analog Beispiel 20 umgesetzt und aufgearbeitet. Man erhielt 43,5 g des Polyesteramids als farblosen Feststoff vom Schmp. 223-226°C.

### Beispiel 25b

34,0 g des Produktes aus Beispiel 1, 11,5 g Hexamethylendiamin-1,6, 34,8 g Adipinsäuredimethylester und 1,5 ml Dibutylzinndiacetat wurden wie in Beispiel 20 umgesetzt und aufgearbeitet. Man erhielt 42,6 g des Polyesteramids als farblosen Feststoff vom Schmp. 219-224°C.

### Beispiel 26

102 g des Produktes aus Beispiel 1, 21,6 g Maleinsäuredimethylester, 24,5 g Glutarsäuredimethylester und 2 ml Dibutylzinndiacetat wurden in 200 ml Solvesso 100 15 h bei 160-165°C gerührt, wobei Methanol abdestilliert wurde. Das Lösungsmittel wurde im Vakuum abdestilliert und der Rückstand mit 100 ml Methanol überschüttet. Nach Abfiltrieren und Trocknen erhielt man 120,5 g des entsprechenden Polyesters vom Schmp. 156-157°C.

### Beispiel 27

51 g des Produktes aus Beispiel 1, 10,8 g Maleinsäuredimethylester, 13,0 g Adipinsäuredimethylester und 1 ml Dibutylzinndiacetat wurden in 150 ml Solvesso 100 wie in Beispiel 26 umgesetzt. Nach Abkühlen auf Raumtemperatur wurde mit 500 ml Methanol und 150 ml Aceton versetzt. Nach Abfiltrieren und Trocknen erhielt man 33,5 g des entsprechenden Polyesters vom Schmp. 149-151°C.

### Beispiel 28

102 g des Produktes des Beispiel 1, 21,6 Maleinsäuredimethylester, 22,1 g Bernsteinsauredimethylester und 2 ml Dibutylzinndiacetat wurden in 200 ml Solvesso 100 wie in Beispiel 26 umgesetzt. Nach Abkühlen, Einrühren in 500 ml Methanol, Abfiltrieren und Trocknen erhielt man 117 g des entsprechenden Polyesters von Schmp. 278-280°C.

### Beispiel 29

102 g des Produktes aus Beispiel 1, 26,1 g Adipinsäuredimethylester, 22,1 g Bernsteinsäuredimethylester und 2 ml Dibutylzinndiacetat wurden in 200 ml Solvesso 100 wie in Beispiel 28 umgesetzt und aufgearbeitet. Man erhielt 130 g des entsprechenden Polyesters vom Schmp. 255-258°C.

### Beispiel 30

Beispiel 29 wurde wiederholt mit der Änderung, daß 24,5 g Glutarsäuredimethylester statt des Bernsteinsäuredimethylesters eingesetzt wurden. Man erhielt 117 g des entsprechenden Polyesters von Schmp. 190-192°C.

### Beispiel 31

51 g des Produktes aus Beispiel 1, 13,0 g Adipinsäuredimethylester, 17,5 g Sebacinsäuredimethylester und 1 ml Dibutylzinndiacetat wurden in 50 ml Solvesso 100 wie in Beispiel 28 umgesetzt und aufgearbeitet. Man erhielt 64 g des entsprechenden Polyesters vom Schmp. 157-160°C.

### Beispiel 32

114,7 g des Produktes aus Beispiel 1, 18,1 g N,N-Bis(2-hydroxyethyl)-tert.-butylamin, 78,4 g Adipinsäuredimethylester und 3 ml Dibutylzinndiacetat wurden 15 h auf 165°C erhitzt, wobei Methanol abdestillierte. Nach Abkühlen der Schmelze wurde mit 500 ml Methanol zur Kristallisation gebracht und filtriert. Man erhielt 140,4 g des entsprechenden Polyesters vom Schmp. 214-220°C.

### Beispiel 33

114,7 g des Produktes aus Beispiel 1, 18,1 g N,N-Bis(2-hydroxyethyl)-tert.-butylamin, 64,9 g Maleinsäuredimethylester und 3 ml Dibutylzinnduacetat wurden wie in Beispiel 32 zur Reaktion gebracht. Nach Abkühlen auf Raumtemperatur wurde die erstarrte Schmelze pulverisiert. Man erhielt so 168 g des enstprechenden Polyesters vom Schmp. 129-132°C.

### Beispiel 34

114,7 g des Produktes aus Beispiel 1, 11,7 g Neopentylglykol, 78,4 g Adipinsäuredimethylester und 3 ml Dibutylzinndiacetat wurden wie in Beispiel 32 umgesetzt und aufgearbeitet. Man erhielt 167,8 g des entsprechenden Polyesters vom Schmp. 228-230°C.

### Beispiel 35

114,7 g des Produktes aus Beispiel 1, 11,7 g Neopentylglykol, 64,9 g Maleinsäuredimethylester und 3 ml Dibutylzinndiacetat wurden in 100 ml Solvesso 100 wie in Beispiel 28 umgesetzt und aufgearbeitet. Man erhielt 100,4 g des entsprechenden Polyesters vom Schmp. 148-150°C.

### Beispiel 36

51 g des Produktes aus Beispiel 1, 28,8 g Tripropylenglykol, 52,2 g Adipinsäuredimethylester und 2 ml Dibutylzinndiacetat wurden wie wie in Beispiel 28 umgesetzt und aufgearbeitet. Man erhielt 44,8 g des entsprechenden Polyesters vom Schmp. 161-164°C.

### Beispiel 37

76,5 g des Produktes aus Beispiel 1, 7,6 g 2-Methyl-2-buten-1,4-diol, 43,2 g Maleinsäuredimethylester und 2 ml Dibutylzinndiacetat wurden wie in Beispiel 28 umgesetzt. Nach Abdestillieren des Lösungsmittels wurde der Rückstand in 200 ml Aceton aufgenommen und auf 1 1 Eiswasser gegossen. Nach Abfiltrieren und Trocknen erhielt man 107,5 g des entsprechenden Polyesters vom Schmp. 122-127°C.

### Beispiel 38

76,5 g des Produktes aus Beispiel 1, 7,6 g 2-Methyl-2-buten-1,4-diol, 52,3 g Adipinsäuredimethylester und 2 ml Dibutylzinndiacetat wurden in 50 ml Solvesso 100 wie in Beispiel 28 umgesetzt und aufgearbeitet. Man erhielt 106,6 g des entsprechenden Polyesters vom Schmp. 192-194°C.

### Beispiel 39

31 g Bis-(2,2,6,6-tetramethyl-4-piperidinyl)-sebacat, 25,1 g Ethylencarbonat und 0,1 g Tetrabutylammoniumiodid wurden 24 h auf 160-170°C erhitzt. Nach Abkühlen auf 90°C wurden 100 ml Methanol zugetropft. Nach Abfiltrieren bei Raumtemperatur und Trocknen erhielt man 17,3 g des Polyesters der Formel 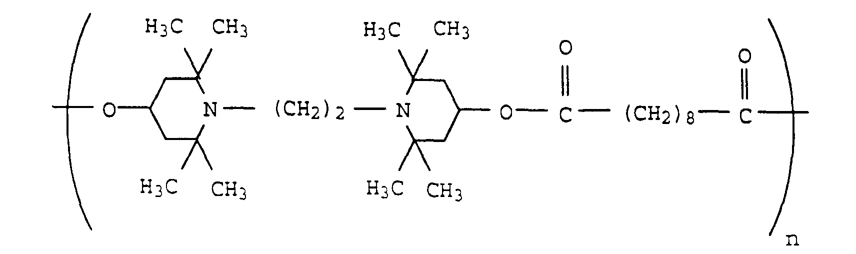 vom Schmp. 139-140°C.

### Anwendungsbeispiele

### Beispiel A

### Stabilisierung von Polypropylen-Spritzlingen

0,25 Gew.-% des Stabilisators wurden in Polypropylen (Novolen® 1300 H der BASF AG) durch einmaliges Extrudieren bei 240°C Massetemperatur im Polymeren gelöst und das anfallende Granulat bei 240°C zu 2 mm dicken Prüfkörpern gespritzt.

Die Prüflinge wurden in einem Schnellbewetterungsgerät vom Typ Xenotest® 1200 bewettert. Ein Maß für den photooxidativen Abbau des Polymeren ist in Abhängigkeit von der Bewetterungszeit die Oberflächenbeschaffenheit des Prüflings. Gemessen wird die Bewetterungszeit bis zum Auftreten von Rißbildung. Die Ergebnisse sind in Tabelle 2 zusammengefaßt.

**Tabelle 2:**

| Stabilisierung von Polypropylenspritzlingen | |
|---|---|
| Stabilisator | Bewetterungszeit bis Rißbildung/h |
| Beispiel 2 | 1500 |
| Beispiel 3 | 1500 |
| Beispiel 4 | 2000 |
| Beispiel 5 | 1500 |
| Beispiel 6 | 1500 |
| Beispiel 7 | 2500 |
| Beispiel 8 | 1500 |
| Beispiel 9 | 1500 |
| Beispiel 10a | 2500 |
| Beispiel 11 | 3000 |
| Beispiel 12e | >3000 |
| Beispiel 13 | 1500 |
| Beispiel 14 | 1500 |
| Beispiel 15 | 1500 |
| Beispiel 16 | 2500 |
| Beispiel 22a | 3000 |
| Beispiel 22b | 3000 |
| Beispiel 25a | 3000 |
| | |
| Vergleich *) | 1500 |

| | |
|---|---|
| *) Vergleich: Beispiel 1 aus der DE-OS 27 19 131 ≙ Tinuvin® 622 der Ciba Geigy AG der Formel | |

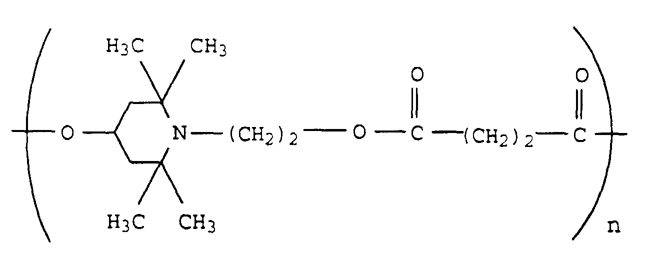

### Beispiel B

### Stabilisierung von Polypropylenfolien

Das aus Beispiel A erhaltene Granulat wurde zu 250 µm dicken Folien gepreßt. Diese Folien wurden im Xenotest 1200 bewettert, bis sie versprödeten. Die Ergebnisse sind in Tabelle 3 zusammengefaßt.

**Tabelle 3:**

| Stabilisierung von Polypropylenfolien | |
|---|---|
| Stabilisator | Bewetterungszeit bis zur Versprödung/h |
| Beispiel 4 | 3000 |
| Beispiel 7 | 3000 |
| Beispiel 9 | 2000 |
| Beispiel 10a | 4000 |
| Beispiel 11 | >3000 |
| Beispiel 12e | 4000 |
| Beispiel 13 | 2500 |
| Beispiel 14 | 2500 |
| Beispiel 15 | 2000 |
| Beispiel 16 | 2000 |
| Beispiel 22a | 2500 |
| Beispiel 22b | 3000 |
| Beispiel 25a | 3000 |
| | |
| Vergleich *) | 2000 |

| | |
|---|---|
| *) Vergleich siehe Tabelle 2 | |

### Beispiel C

### Stabilisierung von Polyethylenfolien

0,1 Gew.-% des Stabilisators wurden in Polyethylen (Lupolen® 1840 D der BASF AG) durch einmaliges Extrudieren bei 180°C Massetemperatur im Polymeren gelöst und das anfallende Granulat wurde zu 250 µm dicken Prüffolien gepreßt. Diese wurden im Xenotest 1200 bewettert, bis sie versprödeten. Gemessen wurde die Zeit bis zur Versprödung. Die Ergebnisse sind in Tabelle 4 zusammengefaßt.

**Tabelle 4:**

| Stabilisierung von Polyethylenfolien | |
|---|---|
| Stabilisator | Bewetterungszeit bis zur Versprödung/h |
| Beispiel 2 | >3000 |
| Beispiel 3 | >3500 |
| Beispiel 4 | >3500 |
| Beispiel 5 | >3000 |
| Beispiel 6 | >3000 |
| Beispiel 7 | 3500 |
| Beispiel 8 | 2500 |
| Beispiel 9 | 2500 |
| Beispiel 10a | 3000 |
| Beispiel 11 | >3000 |
| Beispiel 12e | 3500 |
| Beispiel 13 | >3000 |
| Beispiel 14 | 2500 |
| Beispiel 15 | >3000 |
| Beispiel 16 | 3000 |
| Beispiel 22a | 2500 |
| Beispiel 22b | 3000 |
| Beispiel 25a | >2000 |
| | |
| Vergleich *) | 2000 |

| | |
|---|---|
| *) Vergleich siehe Anmerkung Tabelle 2 | |

## Patentansprüche

1. Kondensations- und Additionspolymere, welche als wiederkehrende Struktureinheit N,N'-verbrückte Bis-tetramethylpiperidinyloxy-Gruppierungen der Formel I 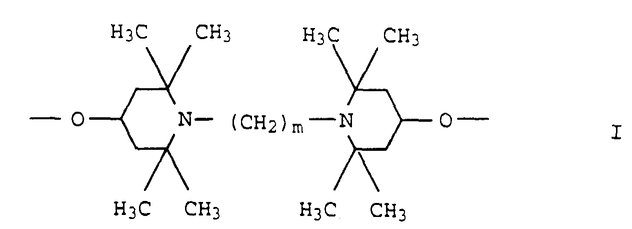 in der die Variable m für die Zahl 2 oder 3 steht, enthalten.

2. Polyester nach Anspruch 1 der allgemeinen Formel II 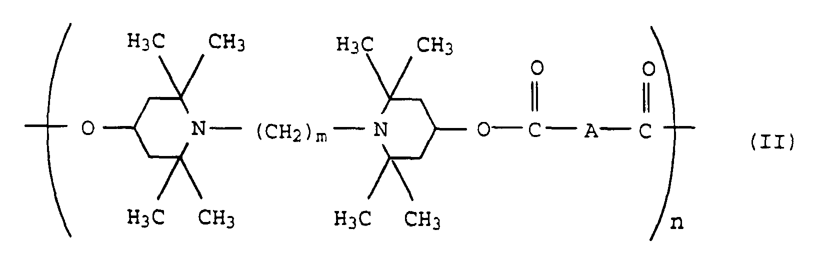 in der
A eine direkte Bindung, C₁- bis C₁₈-Alkylen, das durch bis zu 8 nicht benachbarte Sauerstoffatome oder Brückenglieder der Formel -NR¹- unterbrochen sein kann, C₂- bis C₁₈-Alkenylen, C₃- bis C₁₂-Cycloalkylen, das durch bis zu 3 C₁- bis C₄-Alkylgruppen substituiert sein kann, C₆- bis C₁₈-cycloalkyl-alkylen, das durch bis zu 3 C₁- bis C₄-Alkylgruppen substituiert sein kann, Phenylen, Biphenylen oder Naphthylen, welches durch bis zu 3 C₁- bis C₈-Alkylgruppen oder Hydroxylgruppen substituiert sein kann, C₇- bis C₂₂-Phenylalkylen oder -Diphenylalkylen, das durch bis zu 3 C₁- bis C₈-Alkylgruppen oder Hydroxylgruppen substituiert sein kann, oder einen zweibindigen fünf- oder sechsgliedrigen ungesättigten oder gesättigten heterocyclischen Rest mit bis zu 3 Heteroatomen aus der Gruppe Stickstoff, Sauerstoff und Schwefel, welcher zusätzlich benzanelliert und durch bis zu 3 C₁- bis C₈-Alkylgruppen oder Hydroxylgruppen substituiert sein kann, bezeichnet, wobei zwischen dem Brückenglied A und einer oder beiden flankierenden carbonylgruppen noch jeweils ein Sauerstoffatom eingeschoben sein kann und wobei
R¹ C₁- bis C₄-Alkyl bedeutet,
m die oben genannte Bedeutung und
n einen Wert von 2 bis 50 hat.

3. Polyurethane nach Anspruch 1 der allgemeinen Formel III 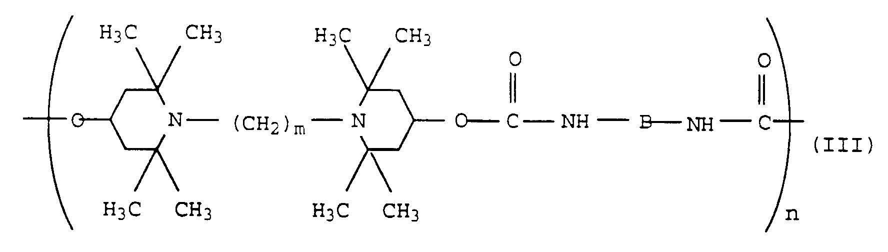 in der
B C₂- bis C₁₈-Alkylen, das durch bis zu 8 nicht benachbarte Sauerstoffatome unterbrochen sein kann, C₄- bis C₁₈-Alkenylen, C₅- bis C₁₂-cycloalkylen, das durch bis zu 3 C₁- bis C₄-Alkylgruppen substituiert sein kann, C₆- bis C₁₈-Cycloalkyl-alkylen, das durch bis zu 3 C₁- bis C₄-Alkylgruppen substituiert sein kann, oder C₇- bis C₂₂-Phenylalkylen oder -Diphenylalkylen, das durch bis zu 3 C₁- bis C₈-Alkylgruppen substituiert sein kann, bezeichnet,
m die oben genannte Bedeutung und
n einen Wert von 2 bis 50 hat.

4. Polyether nach Anspruch 1 der allgemeinen Formel IV 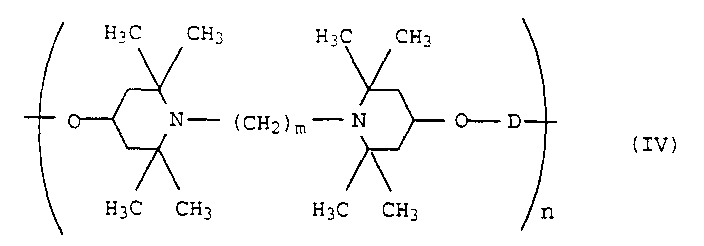 in der
D C₂- bis C₁₈-Alkylen, das durch bis zu 8 nicht benachbarte Sauerstoffatome unterbrochen sein kann, C₄- bis C₁₈-Alkenylen, C₅- bis C₁₂-Cycloalkylen, das durch bis zu 3 C₁- bis C₄-Alkylgruppen substituiert sein kann, C₆- bis C₁₈-Cycloalkyl-alkylen, das durch bis zu 3 C₁- bis C₄-Alkylgruppen substituiert sein kann, oder C₈- bis C₂₂-Phenylalkylen, das durch bis zu 3 C₁- bis C₈-Alkylgruppen substituiert sein kann, bezeichnet,
m die oben genannte Bedeutung und
n einen Wert von 2 bis 50 hat.

5. Polycarbonate nach Anspruch 1 der allgemeinen Formel V 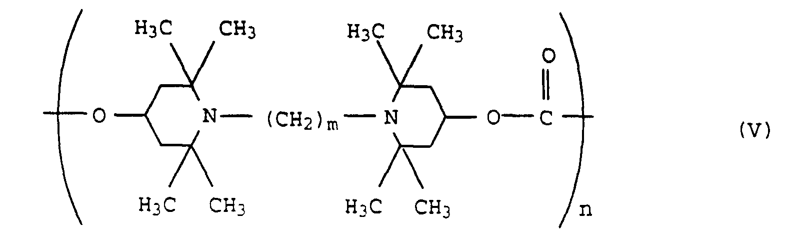 in der
m die oben genannte Bedeutung und
n einen Wert von 2 bis 50 hat.

6. Kondensations- und Additionspolymere nach den Ansprüchen 1 bis 5, in denen bis zu 90 mol-% der Gruppierung I durch Struktureinheiten der allgemeinen Formel VI
-G-E-G- (VI)
in der
E C₂- bis C₃₀-Alkylen, das durch bis zu 14 nicht benachbarte Sauerstoffatome oder Brückenglieder der Formel -NR²- unterbrochen sein kann, C₄- bis c₁₈-Alkenylen, C₃- bis C₁₂-Cycloalkylen, das durch bis zu 3 C₁- bis C₄-Alkylgruppen substituiert sein kann, C₆- bis C₁₈-cycloalkyl-alkylen, das durch bis zu 3 C₁- bis C₄-Alkylgruppen substituiert sein kann, Phenylen, Biphenylen oder Naphthylen, welches durch bis zu 3 C₁- bis C₈-Alkylgruppen oder Hydroxylgruppen substituiert sein kann, oder C₇- bis C₂₂-Phenylalkylen oder -Diphenylalkylen, das durch bis zu 3 C₁- bis C₈-Alkylgruppen oder Hydroxylgruppen substituiert sein kann, bezeichnet, wobei
R² Wasserstoff oder C₁- bis C₄-Alkyl bedeutet, und
G für ein Sauerstoffatom oder die Gruppierung -NR²- steht,
ersetzt sind.

7. Verfahren zur Herstellung von Kondensations- und Additionspolymeren, welche gemäß Anspruch 1 wiederkehrende Struktureinheiten I enthalten, dadurch gekennzeichnet, daß man das N,N'-verbrückte Bis-tetramethylpiperidinol der Formel VII 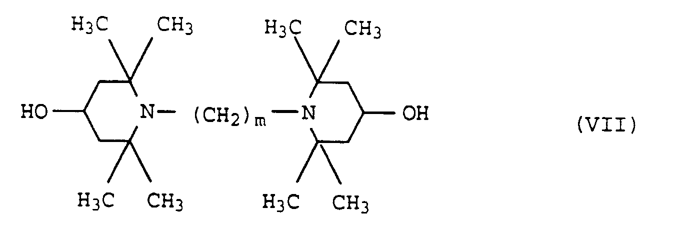 in der m die oben genannte Bedeutung hat, mit entsprechenden bifunktionellen OH-reaktiven Verbindungen umsetzt.

8. Verfahren zur Herstellung von Polyestern II gemäß Anspruch 2, dadurch gekennzeichnet, daß man das N,N'-verbrückte Bis-tetramethylpiperidinol der Formel VII 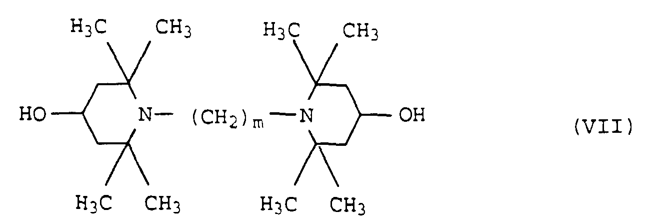 in der m die oben genannte Bedeutung hat, mit Dicarbonsäurederivaten der allgemeinen Formel VIII 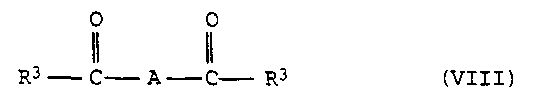 in der
R³ für Hydroxyl, C₁- bis C₄-Alkoxy oder ein Halogenatom steht, wobei als Dicarbonsäurederivat VIII auch das intra- oder intermolekulare Anhydrid der zugrundeliegenden Dicarbonsäure eingesetzt werden kann, und
A die obengenannte Bedeutung hat,
umsetzt.

9. Verfahren zur Herstellung von Polyurethanen III gemäß Anspruch 3, dadurch gekennzeichnet, daß man das N,N'-verbrückte Bis-tetramethylpiperidinoi der Formel VII 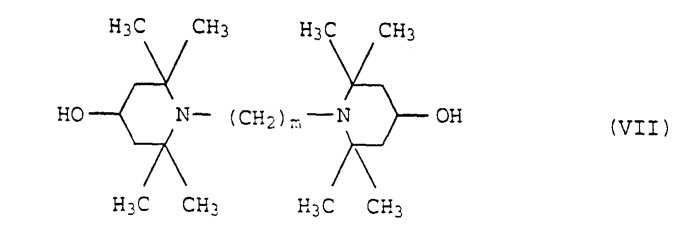 in der m die oben genannte Bedeutung hat, mit Diisocyanaten der allgemeinen Formel IX
O=C=N-B-N=C=O (IX)
in der B die oben genannte Bedeutung hat, umsetzt.

10. Verfahren zur Herstellung von Polyethern IV gemäß Anspruch 4, dadurch gekennzeichnet, daß man das N,N'-verbrückte Bis-tetramethylpiperidinol der Formel VII 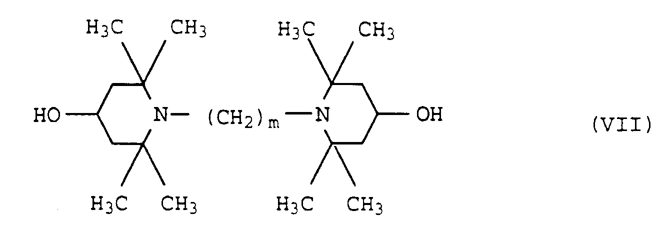 in der m die oben genannte Bedeutung hat, mit einem Dialkylierungsmittel der allgemeinen Formel X
R⁴-D-R⁴ (X)
in der
R⁴ für ein Halogenatom oder eine Sulfonsäuregruppierung der Formel -O-SO₂-R⁵ steht, wobei R⁵ C₁- bis C₄-Alkyl, Phenyl oder Tolyl bedeutet, und
D die obengenannten Bedeutung hat,
umsetzt.

11. Verfahren zur Herstellung von Polycarbonaten V gemäß Anspruch 5, dadurch gekennzeichnet, daß man das N,N'-verbrückte Bis-tetramethylpiperidionol der Formel VII 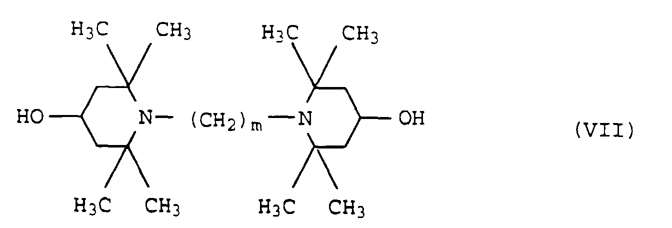 in der m die oben genannte Bedeutung hat, mit Kohlensäure-Derivaten der allgemeinen Formel XI 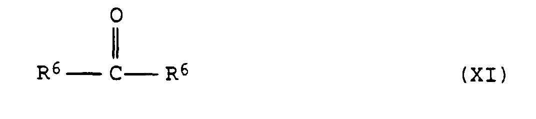 in der die beiden Reste R⁶ gleich oder verschieden sind und für Halogenatome, C₁- bis C₄-Alkoxy oder Phenoxy stehen, umsetzt.

12. Verfahren zur Herstellung von Kondensations- und Additionspolymeren, welche gemäß Anspruch 1 wiederkehrende Struktureinheiten I enthalten, dadurch gekennzeichnet, daß man Bistetramethylpiperidinyloxy-Verbindungen der allgemeinen Formel XII 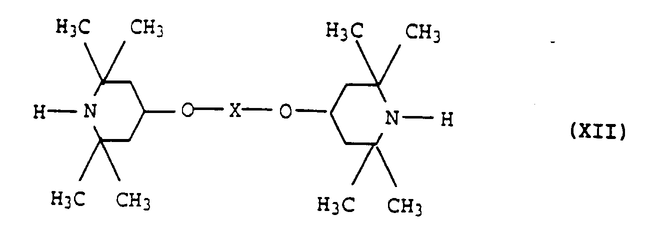 in der X sonstige Strukturelemente der herzustellenden Polymere bedeutet, mit einem cyclischen Carbonat der allgemeinen Formel XIII 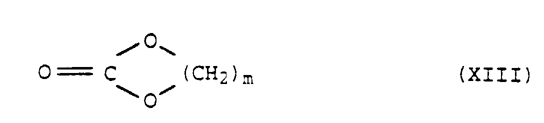 in der die Variable m für die Zahl 2 oder 3 steht, umsetzt.

13. Verfahren zur Herstellung von Polyestern II gemäß Anspruch 2, dadurch gekennzeichnet, daß man Bis-tetramethylpiperidinylester der allgemeinen Formel XIV 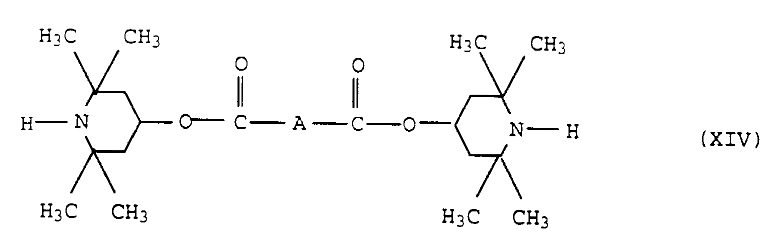 in der A die oben genannte Bedeutung hat, mit einem cyclischen Carbonat XIII 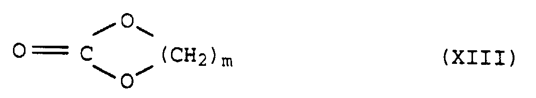 in der die Variable m für die Zahl 2 oder 3 steht, umsetzt.

14. Verfahren zur Herstellung der Polyurethanen III gemäß Anspruch 3, dadurch gekennzeichnet, daß man Bis-tetramethylpiperidinylurethane der allgemeinen Formel XV 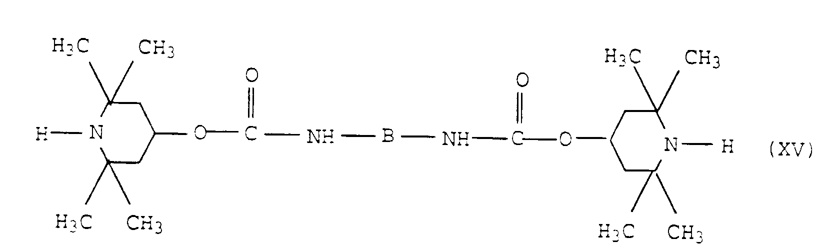 in der B die oben genannte Bedeutung hat, mit einem cyclischen Carbonat der allgemeinen Formel XIII 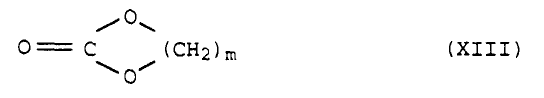 in der die Variable m für die Zahl 2 oder 3 steht, umsetzt.

15. Verfahren zur Herstellung von Polyethern IV gemäß Anspruch 4, dadurch gekennzeichnet, daß man Bis-tetramethylpiperidinylether der allgemeinen Formel XVI 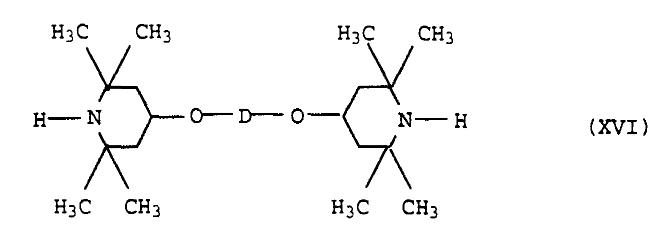 in der D die oben genannte Bedeutung hat, mit einem cyclischen Carbonat der allgemeinen Formel XIII 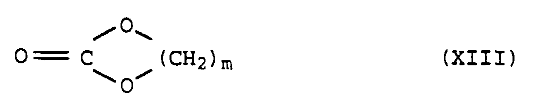 in der die Variable m für die Zahl 2 oder 3 steht, umsetzt.

16. Verfahren zur Herstellung der Polycarbonaten V gemäß Anspruch 5, dadurch gekennzeichnet, daß man das Bis-tetramethylpiperidinylcarbonat der Formel XVII 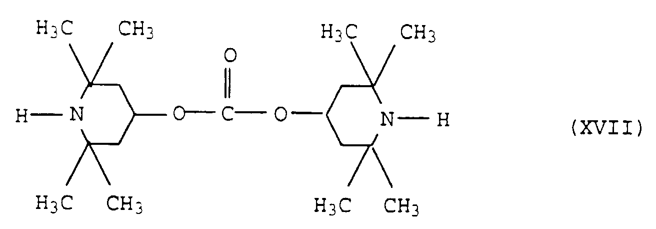 mit einem cyclischen Carbonat der allgemeinen Formel XIII 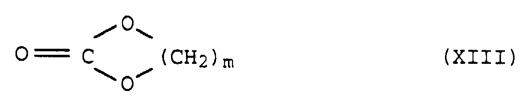 in der die Variable m für die Zahl 2 oder 3 steht, umsetzt.

17. Verwendung von Kondensations- und Additionspolymeren gemäß den Ansprüchen 1 bis 6 als Lichtschutzmittel und Stabilisatoren für organisches Material.

18. Verwendung von Kondensations- und Additionspolymeren gemäß den Ansprüchen 1 bis 6 als Lichtschutzmittel und Stabilisatoren für Kunststoffe und Lacke.

19. Gegen die Einwirkung von Licht, Sauerstoff und Wärme stabilisiertes organisches Material, enthaltend 0,01 bis 5 Gew.-%, bezogen auf die Menge des organischen Materials, eines oder mehrerer der Kondensations- oder Additionspolymere gemäß den Ansprüchen 1 bis 6.

20. Gegen die Einwirkung von Licht, Sauerstoff und Wärme stabilisierte Kundstoffe und Lacke, enthaltend 0,01 bis 5 Gew.-%, bezogen auf die Menge der Kunststoffe und Lacke, eines oder mehrerer der Kondensations- oder Additionspolymere gemäß den Ansprüchen 1 bis 6.

## Claims

1. A condensation or addition polymer which comprises as structural repeating unit an N,N'-bridged bistetramethylpiperidyloxy group of the formula I 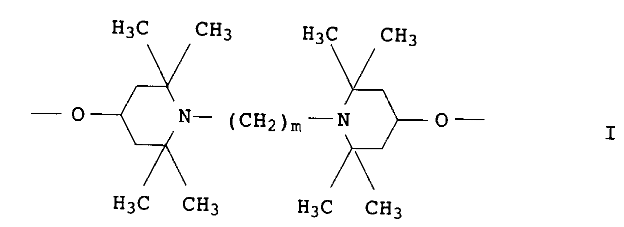 in which m is 2 or 3.

2. A polyester as claimed in claim 1 of the formula II 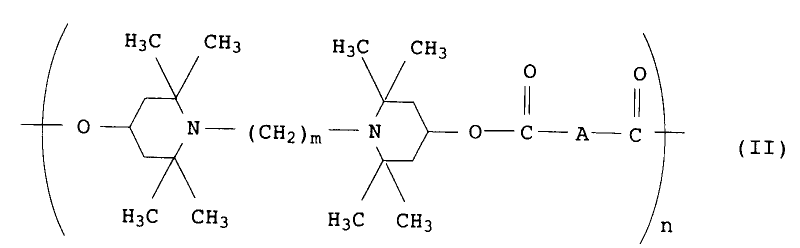 in which
A is a direct bond, C₁-C₁₈-alkylene which may be interrupted by up to 8 nonadjacent oxygen atoms or bridge members of the formula -NR¹-, C₂-C₁₈-alkenylene, C₃-C₁₂-cycloalkylene which may be substituted by up to 3 C₁-C₄-alkyl groups, C₆-C₁₈-cycloalkylalkylene which may be substituted by up to 3 C₁-C₄-alkyl groups, phenylene, biphenylene or naphthylene which may be substituted by up to 3 C₁-C₈-alkyl groups or hydroxyl groups, C₇-C₂₂-Phenylalkylene or C₇-C₂₂-diphenylalkylene which may be substituted by up to 3 C₁-C₈-alkyl groups or hydroxyl groups, or is a divalent five- or six-membered unsaturated or saturated heterocyclic radical containing up to 3 heteroatoms from the group consisting of nitrogen, oxygen and sulfur and which may additionally be benzo-fused and substituted by up to 3 C₁-C₈-alkyl groups or hydroxyl groups, and for which in each case one oxygen atom may also be inserted between the bridge member A and one or both flanking carbonyl groups, and
R¹ is C₁-C₄-alkyl,
m is as defined above, and
n is from 2 to 50.

3. A polyurethane as claimed in claim 1 of the formula III 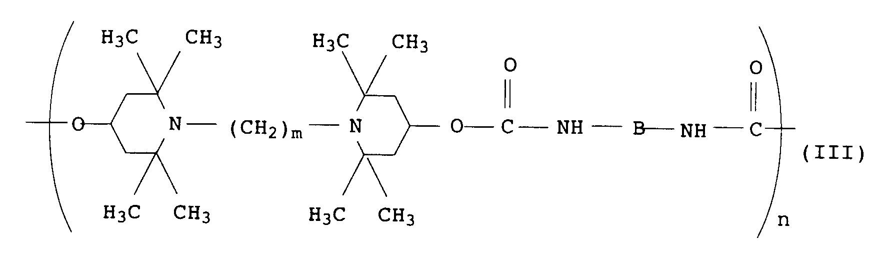 in which
B is C₂-C₁₈-alkylene which may be interrupted by up to 8 nonadjacent oxygen atoms, C₄-C₁₈-alkenylene, C₅-C₁₂-cycloalkylene which may be substituted by up to 3 C₁-C₄-alkyl groups, C₆-C₁₈-cycloalkylalkylene which may be substituted by up to 3 C₁-C₄-alkyl groups, or C₇-C₂₂-Phenylalkylene or C₇-C₂₂-diphenylalkylene which may be substituted by up to 3 C₁-C₈-alkyl groups,
m is as defined above, and
n is from 2 to 50.

4. A polyether as claimed in claim 1 of the formula IV 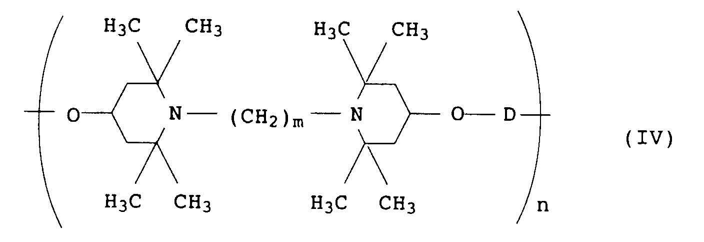 in which
D is C₂-C₁₈-alkylene which may be interrupted by up to 8 nonadjacent oxygen atoms, C₄-C₁₈-alkenylene, C₅-C₁₂-cycloalkylene which may be substituted by up to 3 C₁-C₄-alkyl groups, C₆-C₁₈-cycloalkylalkylene which may be substituted by up to 3 C₁-C₄-alkyl groups, or C₈-C₂₂-phenylalkylene which may be substituted by up to 3 C₁-C₈-alkyl groups,
m is as defined above, and
n is from 2 to 50.

5. A polycarbonate as claimed in claim 1 of the formula V 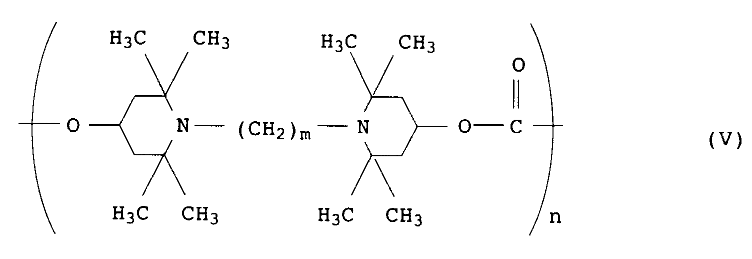 in which
m is as defined above, and
n is from 2 to 50.

6. A condensation or addition polymer as claimed in any of claims 1 to 5, in which up to 90 mol% of the group I is replaced by structural units of the formula VI
-G-E-G (VI)
in which
E is C₂-C₃₀-alkylene which may be interrupted by up to 14 nonadjacent oxygen atoms or bridge members of the formula -NR²-, C₄-C₁₈-alkenylene, C₃-C₁₂-cycloalkylene which may be substituted by up to 3 C₁-C₄-alkyl groups, C₆-C₁₈-cycloalkylalkylene which may be substituted by up to 3 C₁-C₄-alkyl groups, phenylene, biphenylene or naphthylene which may be substituted by up to 3 C₁-C₈-alkyl groups or hydroxyl groups, or C₇-C₂₂-Phenylalkylene or C₇-C₂₂-diphenylalkylene which may be substituted by up to 3 C₁-C₈-alkyl groups or hydroxyl groups, and
R² is hydrogen or C₁-C₄-alkyl, and
G is oxygen or a group -NR²-.

7. A process for the preparation of a condensation or addition polymer comprising structural repeating units I as in claim 1, which comprises reacting an N,N'-bridged bistetramethylpiperidinol of the formula VII 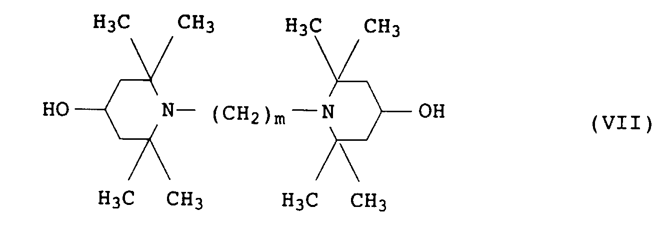 in which m is as defined above with an appropriate bifunctional OH-reactive compound.

8. A process for the preparation of a polyester II as claimed in claim 2, which comprises reacting an N,N'-bridged bistetramethylpiperidinol of the formula VII 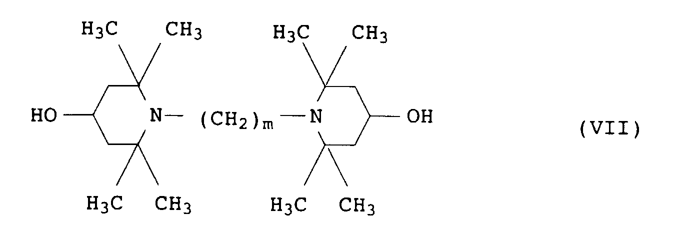 in which m is as defined above with a dicarboxylic acid derivative of the formula VIII 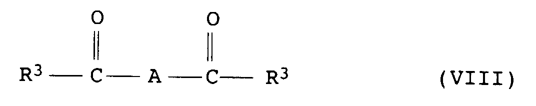 in which
R³ is hydroxyl, C₁-C₄-alkoxy or halogen, and
A is as defined above,
and the dicarboxylic acid derivative VIII which is employed may also be the intramolecular or intermolecular anhydride of the parent dicarboxylic acid.

9. A process for the preparation of a polyurethane III as claimed in claim 3, which comprises reacting an N,N'-bridged bistetramethylpiperidinol of the formula VII 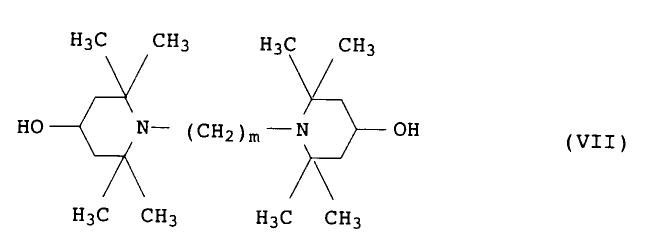 in which m is as defined above with a diisocyanate of the formula IX
O=C=N-B-N=C=O (IX)
in which B is as defined above.

10. A process for the preparation of a polyether IV as claimed in claim 4, which comprises reacting an N,N'-bridged bistetramethylpiperidinol of the formula VII 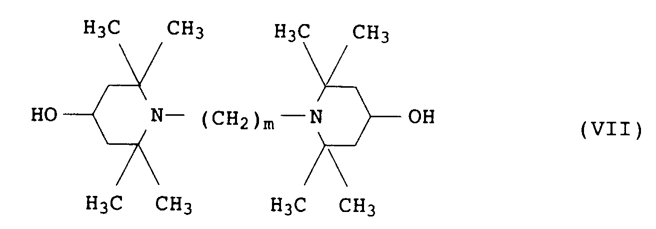 in which m is as defined above with a dialkylating agent of the formula X
R⁴-D-R⁴ (X)
in which
R⁴ is halogen or a sulfonyloxy group of the formula -O-SO₂-R⁵ in which R⁵ is C₁-C₄-alkyl, phenyl or tolyl, and
D is as defined above.

11. A process for the preparation of a polycarbonate V as claimed in claim 5, which comprises reacting an N,N'-bridged bistetramethylpiperidinol of the formula VII 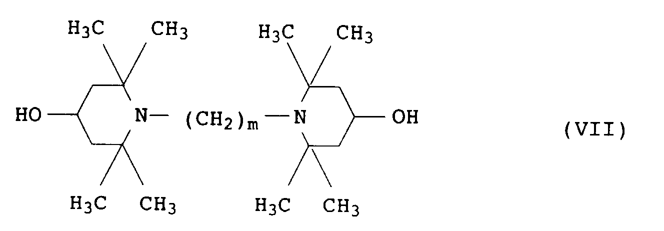 in which m is as defined above with a carbonic acid derivative of the formula XI 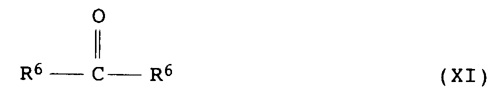 in which each of the two radicals R⁶ is identical or different to the other and is halogen, C₁-C₄-alkoxy or phenoxy.

12. A process for the preparation of a condensation or addition polymer containing structural repeating units I as in claim 1, which comprises reacting a bistetramethylpiperidyloxy compound of the formula XII 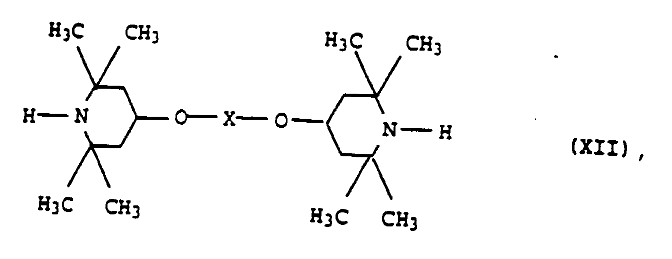 in which X denotes other structural elements of the polymer to be prepared, with a cyclic carbonate of the formula XIII 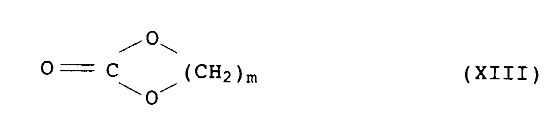 in which m is 2 or 3.

13. A process for the preparation of polyester II as claimed in claim 2, which comprises reacting a bistetramethylpiperidyl ester of the formula XIV 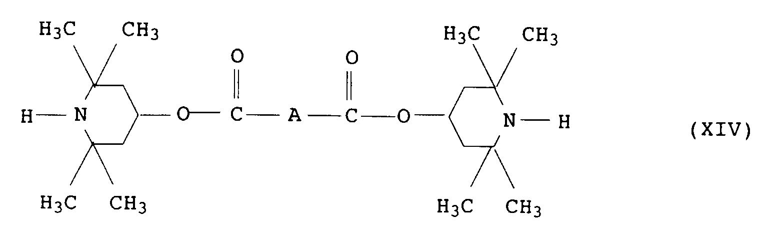 in which A is as defined above with a cyclic carbonate XIII 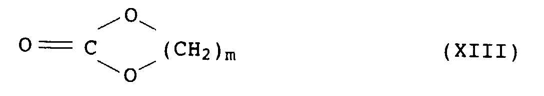 in which m is 2 or 3.

14. A process for the preparation of a polyurethane III as claimed in claim 3, which comprises reacting a bistetramethylpiperidylurethane of the formula XV 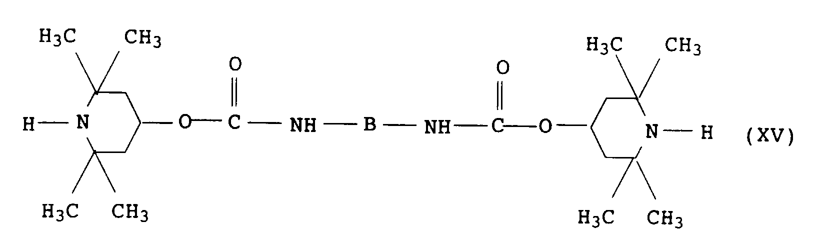 in which B is as defined above with a cyclic carbonate of the formula XIII 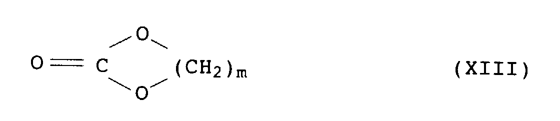 in which m is 2 or 3.

15. A process for the preparation of a polyether IV as claimed in claim 4, which comprises reacting a bistetramethylpiperidyl ether of the formula XVI 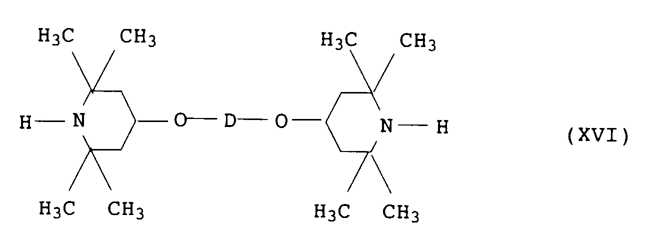 in which D is as defined above with a cyclic carbonate of the formula XIII 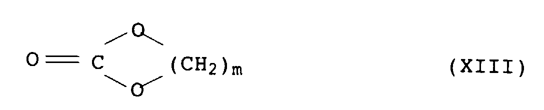 in which m is 2 or 3.

16. A process for the preparation of a polycarbonate V as claimed in claim 5, which comprises reacting a bistetramethylpiperidyl carbonate of the formula XVII 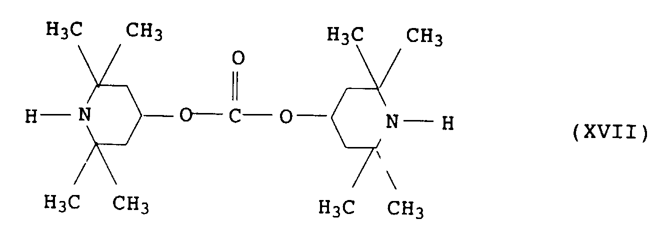 with a cyclic carbonate of the formula XIII 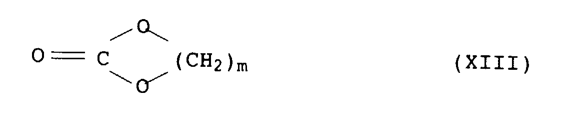 in which m is 2 or 3.

17. The use of a condensation or addition polymer as claimed in any of claims 1 to 6 as a light stabilizer and/or other stabilizer for organic material.

18. The use of a condensation or addition polymer as claimed in any of claims 1 to 6 as a light stabilizer and/or other stabilizer for plastics and coating materials.

19. An organic material stabilized against the action of light, oxygen and heat, comprising from 0.01 to 5% by weight, based on the quantity of the organic material, of one or more of the condensation or addition polymers as claimed in any of claims 1 to 6.

20. A plastic or coating material stabilized against the action of light, oxygen and heat, comprising from 0.01 to 5% by weight, based on the quantity of the plastic or coating material, of one or more of the condensation or addition polymers as claimed in any of claims 1 to 6.

## Revendications

1. Polymères d'addition et de condensation contenant en tant que motif répétitif des groupements bis(tétraméthylpipéridinyloxy) N,N'-pontés de formule 1 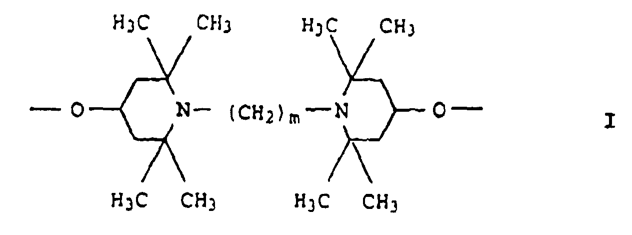 dans laquelle la variable m est mise pour le nombre 2 ou 3.

2. Polyesters selon la revendication 1 de formule générale II 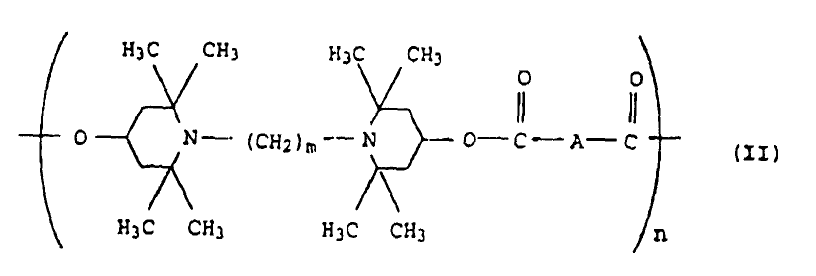 dans laquelle
A représente une liaison directe, un groupement alkylène en C₁-C₁₈ pouvant être interrompu par jusqu'à 8 atomes d'oxygène non voisins ou par des ponts de formule -NR¹-, un groupement alcénylène en C₁-C₁₈, un groupement cycloalkylène en C₃-C₁₂ pouvant être substitué par jusqu'à 3 groupements alkyle en C₁-C₄, un groupement (cycloalkyle en C₆-C₁₈)alkylène pouvant être substitué par jusqu'à 3 groupements alkyle en C₁-C₄, un groupement phénylène, biphénylène ou naphtylène pouvant être substitué par jusqu'à 3 groupements alkyle en C₁-C₈ ou hydroxyl, un groupement phénylalkylène en C₇-C₂₂ ou diphénylalkylène en C₇-C₂₂ pouvant être substitué par jusqu'à 3 groupements alkyle en C₁-C₈ ou hydroxyl, ou un reste hétérocyclique bivalent, saturé ou insaturé, à cinq ou six maillons, comptant jusqu'à 3 hétéroatomes choisis dans le groupe formé par l'azote, l'oxygène et le soufre, pouvant être benzocondensé et substitué par jusqu'à 3 groupements alkyle en C₁-C₈ ou hydroxyl,
un atome d'oxygène pouvant être inséré à chaque fois entre le maillon A et un des groupements carbonyle adjacents, ou les deux, et
R¹ représente un groupement alkyle en C₁-C₄,
m prend la signification susmentionnée et
n vaut de 2 à 50.

3. Polyuréthannes selon la revendication 1 de formule générale III 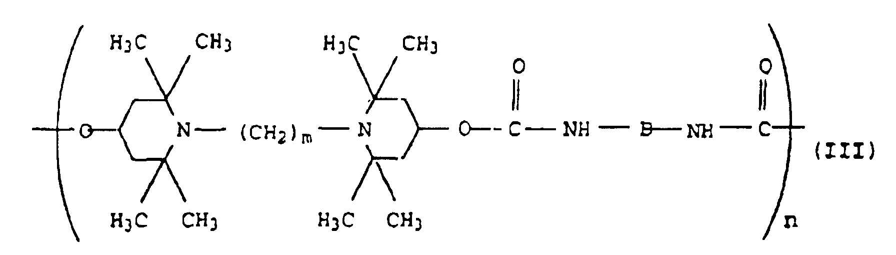 dans laquelle
B représente un groupement alkylène en C₂-C₁₈ pouvant être interrompu par jusqu'à 8 atomes d'oxygène non voisins, un groupement alcénylène en C₄-C₁₈, un groupement cycloalkylène en C₅-C₁₂ pouvant être substitué par jusqu'à 3 groupements alkyle en C₁-C₄, un groupement (cycloalkyle en C₆-C₁₈)alkyléne pouvant être substitué par jusqu'à 3 groupements alkyle en C₁-C₄, ou bien un groupement phénylalkylène en C₇-C₂₂ ou diphénylalkylène en C₇-C₂₂ pouvant être substitué par jusqu'à 3 groupements alkyle on C₁-C₈,
m prend la signification susmentionnée et
n vaut de 2 à 50.

4. Polyéthers selon la revendication 1 de formule générale IV 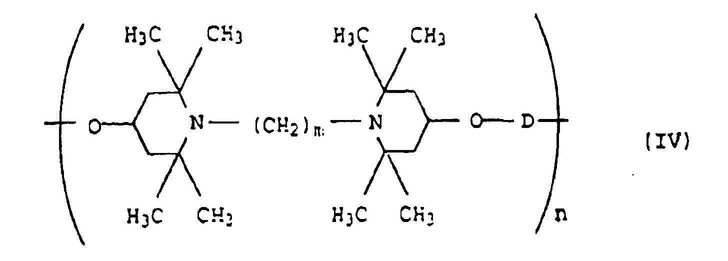 dans laquelle
D représente un groupement alkylène en C₂-C₁₈ pouvant être interrompu par jusqu'à 8 atomes d'oxygène non voisins, un groupement alcénylène en C₄-C₁₈, un groupement cycloalkylène en C₅-C₁₂ pouvant être substitué par jusqu'à 3 groupements alkyle en C₁-C₄, un groupement (cycloalkyle en C₈-C₁₈)alkylène pouvant être substitué par jusqu'à 3 groupements alkyle en C₁-C₄, ou bien un groupement phénylalkylène en C₈-C₂₂ pouvant être substitué par jusqu'à 3 groupomonts alkyle en C₁-C₈,
m prend la signification susmentionnée et
n vaut de 2 à 50.

5. Polycarbonates selon la revendication 1 de formule générale V 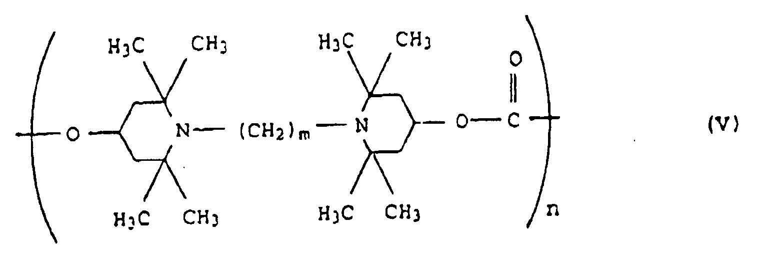 dans laquelle
m prend la signification susmentionnée et
n vaut de 2 à 50.

6. Polymères d'addition et de condensation selon l'une quelconque des revendications 1 à 5, dans lesquels jusqu'à 90% en mole des groupements 1 sont remplacés par des motifs de formulo générale VI
-G-E-G- VI
dans laquelle
E représente un groupement alkylène en C₂-C₃₀ pouvant être interrompu jusqu'à 14 atomes d'oxygène non voisins ou par des ponts de formule -NR²-, un groupemont alcénylène en C₄-C₁₈, un groupement cycloalkylène en C₃-C₁₂ pouvant être substitué par jusqu'à 3 groupements alkyle en C₁-C₄, un groupement (cycloalkyle en C₈-C₁₈)alkylène pouvant être substitué par jusqu'à 3 groupements alkyle en C₁-C₄, un groupement phénylène, biphénylène ou naphtylène pouvant être substitué par jusqu'à 3 groupements alkyle en C₁-C₈ ou hydroxyl, un groupement phénylalkylène en C₇-C₂₂ ou diphénylalkylène en C₇-C₂₂ pouvant être substitué par jusqu'à 3 groupements alkyle en C₁-C₈ ou hydroxyl, où
R² représente un atome d'hydrogène ou un groupement alkyle en C₁-C₄, et
G est mis pour un atome d'oxygène ou pour le groupement -NR²-.

7. Procédé de préparation de polymères d'addition et de condensation contenant des motifs répétitifs 1 selon la revendication 1, caractérisé en ce que l'on fait réagir le bis(tétraméthylpipéridinol) N,N'-ponté de formule VII 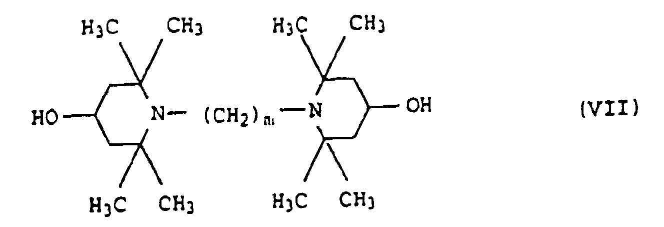 dans laquelle m prend la signification susmentionnée, avec des composés correspondants bifonctionnels à groupements -OH réactifs.

8. Procédé de préparation de polyesters II selon la revendication 2, caractérisé en ce que l'on fait réagir le bis(tétraméthylpipéridinol) N,N'-ponté de formule VII 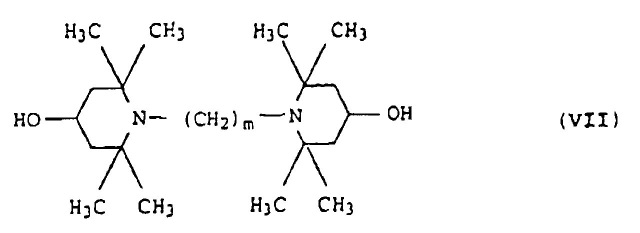 dans laquelle m prend la signification susmentionnée, avec des dérivés d'acides dicarboxyliques de formule générale VIII 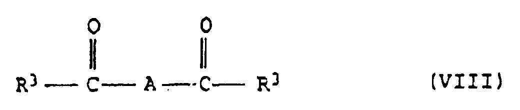 dans laquelle
R³ représente un groupement hydroxyl, un groupement alcoxy en C₁-C₄ ou un atome d'halogène, où on peut aussi utiliser en tant que dérivé d'acide dicarboxylique VIII l'anhydride intra- ou intermoléculaire de l'acide dicarboxylique correspondant, et
A prend la signification susmentionnée.

9. Procédé de préparation de polyuréthannes III selon la revendication 3, caractérisé en ce que l'on fait réagir le bis(tétraméthylpipéridinol) N,N'-ponté de formule VII 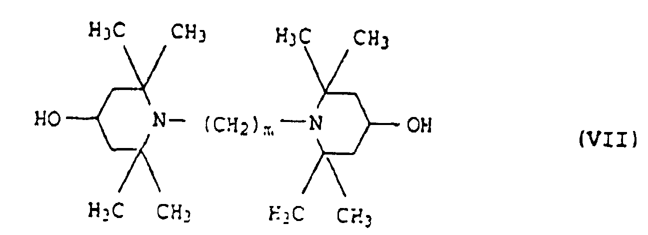 dans laquelle m prend la signification susmentionnée, avec des dlisocyanates de formule générale IX
O=C=N-B-N=C=O (IX)
dans laquelle B prend la signification susmentionnée.

10. Procédé de préparation de polyéthers IV selon la revendication 4, caractérisé en ce que l'on fait réagir le bis(tétraméthylpipéridinol) N,N'-ponté de formule VII 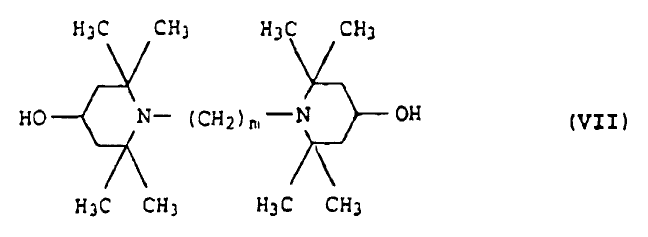 dans laquelle m prend la signification susmentionnée, avec un agent de dialkylation de formule générale X
R⁴-D-R⁴ (X)
dans laquelle
R⁴ représente un atome d'halogène ou un groupement acide sulfonique de formule -O-SO₂-R⁵, où R⁵ signifie un groupement alkyle en C₁-C₄, phényle ou tolyle, et
D a la signification susmentionnée.

11. Procédé de préparation de polycarbonates V selon la revendication 5, caractérisé en ce que l'on fait réagir le bis(tétraméthylpipéridinol) N,N'-ponté de formule VII 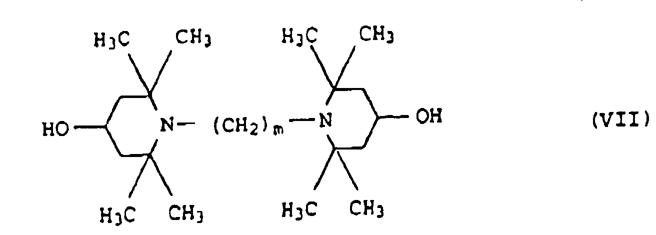 dans laquelle m prend la signification susmentionnée, avec des dérivés d'acide carboxylique de formule générale XI 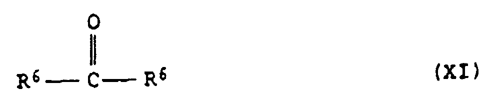 dans laquelle les deux restes R⁶ sont identiques ou différents et sont mis pour des atomes d'halogène, des groupements alcoxy en C₁-C₄ ou phénoxy.

12. Procédé de préparation de polymères d'addition et de condensation contenant des motifs répétitifs I selon la revendication 1, caractérisé en ce que l'on fait réagir des composés bis(tétraméthylpipéridinyloxy) de formule générale XII 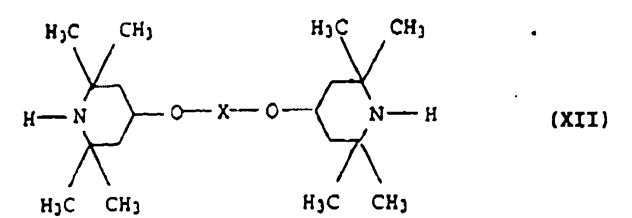 dans laquelle X représente un élément structurel habituel du polymère à préparer, avec un carbonate cyclique de formule générale XIII 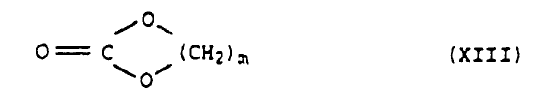 dans laquelle la variable m est mise pour le nombre 2 ou 3.

13. Procédé de préparation de polyesters II selon la revendication 2, caractérisé en ce que l'on fait réagir un bis(tétraméthylplpéridinyl)ester de formule générale XIV 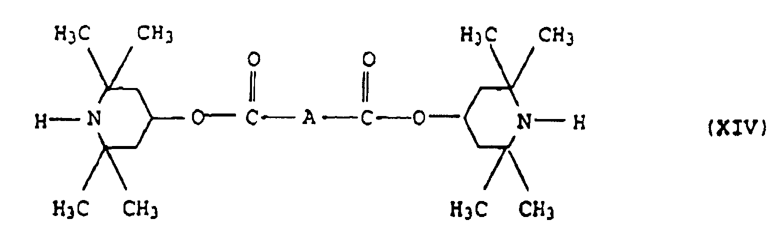 dans laquelle A prend la signification susmontionnée, avec un carbonate cyclique XIII 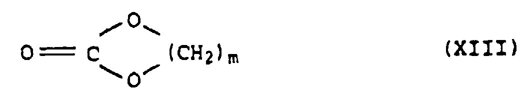 dans lequel la variable m est mise pour le nombre 2 ou 3,

14. Procédé de préparation de polyuréthannes III selon la revendication 3, caractérisé en ce que l'on fait réagir un bis(tétraméthylpipéridinyl)uréthanne de formule générale XV 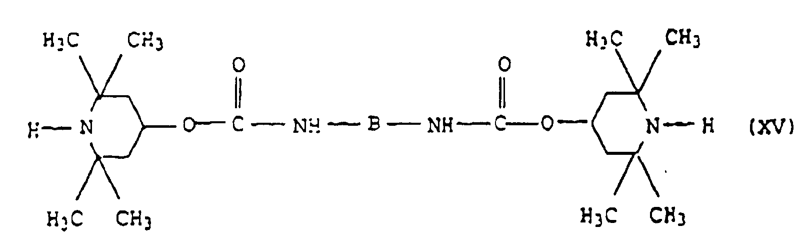 dans laquelle B prend la signification susmentionnée, avec un carbonate cyclique de formule générale XIII 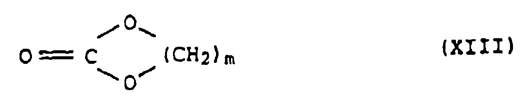 dans lequel la variable m est mise pour le nombre 2 ou 3.

15. Procédé de préparation de polyéthers IV selon la revendication 4, caractérisé en ce que l'on fait réagir un bis(tétraméthylpipéridinyl)éther de formule générale XVI 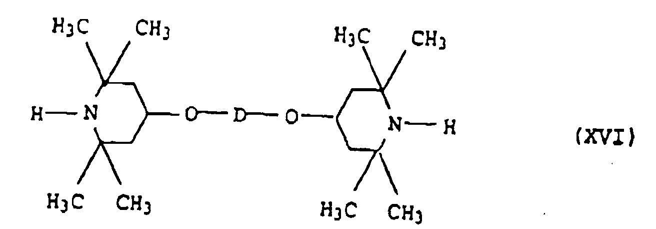 dans laquelle D prend la signification susmentionnée, avec un carbonate cyclique de formule générale XIII 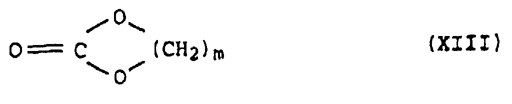 dans laquelle la variable m est mise pour le nombre 2 ou 3.

16. Procédé de préparation de polycarbonates V selon la revendication 5, caractérisé en ce que l'on fait réagir le bis(tétraméthylpipéridinyl)carbonate de formule générale XVII 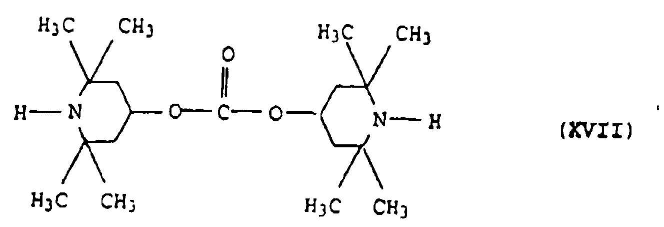 avec un carbonate cyclique de formule générale XIII 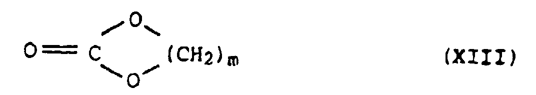 dans laquelle la variable m est mise pour le nombre 2 ou 3.

17. Utilisation de polymères d'addition et de condensation selon l'une quelconque des revendications 1 à 6, en tant qu'agent de protection contre la lumière et que stabilisants pour des matériaux organiques.

18. Utilisation de polymères d'addition et de condensation selon l'une quelconque des revendications 1 à 6, en tant qu'agent de protection contre la lumière et que stabilisants pour matières plastiques et laques.

19. Matériaux organiques protégés contre l'action de la lumière, de l'oxygène et de la chaleur, contenant 0,01-5% en poids, par rapport à la quantité de matériau organique, d'un ou plusieurs polymères d'addition et de condensation selon l'une quelconque des revendications 1 à 6.

20. Matières plastiques et laques protégées contre l'action de la lumière, de l'oxygène et de la chaleur, contenant 0,01-5% en poids, par rapport à la quantité de matières plastiques et de laques, d'un ou plusieurs polymères d'addition et de condensation selon l'une quelconque des revendications 1 à 6.
